(19)

Europäisches
Patentamt
European
Patent Office
Office européen
des brevets

(11)    **EP 4 262 122 A1**

(12)    **EUROPEAN PATENT APPLICATION**
published in accordance with Art. 153(4) EPC

(43) Date of publication:
**18.10.2023 Bulletin 2023/42**

(21) Application number: **20967939.8**

(22) Date of filing: **31.12.2020**

(51) International Patent Classification (IPC):
**H04L 5/00** (2006.01)

(52) Cooperative Patent Classification (CPC):
**H04L 5/00**

(86) International application number:
**PCT/CN2020/142580**

(87) International publication number:
**WO 2022/141601 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• YU, Jian
  **Shenzhen, Guangdong 518129 (CN)**
• LU, Shaozhong
  **Shenzhen, Guangdong 518129 (CN)**
• GUO, Zhiheng
  **Shenzhen, Guangdong 518129 (CN)**

(74) Representative: **Huawei European IPR**
**Huawei Technologies Duesseldorf GmbH**
**Riesstraße 25**
**80992 München (DE)**

(54)    **METHOD FOR SENDING DEMODULATION REFERENCE SIGNAL AND METHOD FOR
RECEIVING DEMODULATION REFERENCE SIGNAL, AND COMMUNICATION DEVICE**

(57)    This application provides a DMRS sending method, a DMRS receiving method, and a communication apparatus. The method includes: receiving indication information indicating a scheduled DMRS port; and sending a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position. In this way, different DMRS port sets are mapped to the first time domain position and the second time domain position, so that more orthogonal DMRS ports can be supported, thereby improving a system capacity.

FIG. 13

**Description**

**TECHNICAL FIELD**

This application relates to the communication field, and more specifically, to a demodulation reference signal (demodulation reference signal, DMRS) sending method, a DMRS receiving method, and a communication apparatus.

**BACKGROUND**

In new radio (new radio, NR), a DMRS is used for data demodulation on a data channel such as a physical uplink shared channel (physical uplink shared channel, PUSCH). A larger quantity of orthogonal DMRS ports supported by uplink transmission indicates a larger quantity of spatial layers for parallel transmission and a larger system capacity. However, system overheads also need to be considered when the quantity of DMRS ports increases. How to support more orthogonal DMRS ports without increasing system overheads as much as possible or with increasing system overheads as small as possible becomes an urgent problem to be resolved for improving the system capacity.

**SUMMARY**

This application provides a DMRS sending method, a DMRS receiving method, and a communication apparatus, to support more orthogonal DMRS ports, and improve a system capacity.

According to a first aspect, a DMRS sending method is provided. The method may be performed by a transmitting end device (for example, a terminal device), or may be performed by a chip or a circuit configured in the transmitting end device. This is not limited in this application.

The method includes: receiving indication information, where the indication information indicates a scheduled DMRS port; and sending a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

According to a second aspect, a DMRS receiving method is provided. The method may be performed by a receiving end device (for example, a network device), or may be performed by a chip or a circuit configured in the receiving end device. This is not limited in this application.

The method includes: sending indication information, where the indication information indicates a scheduled DMRS port; and receiving a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

According to a third aspect, a DMRS receiving method is provided. The method may be performed by a receiving end device (for example, a terminal device), or may be performed by a chip or a circuit configured in the receiving end device. This is not limited in this application.

The method includes: receiving indication information, where the indication information indicates a scheduled DMRS port; and receiving a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

According to a fourth aspect, a DMRS sending method is provided. The method may be performed by a transmitting end device (for example, a network device), or may be performed by a chip or a circuit configured in the transmitting end device. This is not limited in this application.

The method includes: sending indication information, where the indication information indicates a scheduled DMRS port; and sending a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

With reference to any one of the first aspect to the fourth aspect, in a possible implementation, M is an integer greater than 12.

It should be understood that, for any one of the foregoing aspects, the first time domain position and the second time domain position may be consecutive in time domain, or may be nonconsecutive in time domain. Quantities of symbols occupied by (or corresponding to) the first time domain position and the second time domain position may be equal or unequal. For example, the first time domain position and the second time domain position may each occupy two symbols; or the first time domain position occupies one symbol, and the second time domain position occupies two symbols. In addition, a quantity of DMRS ports included in the first DMRS port set and a quantity of DMRS ports included in the second DMRS port set may be equal or unequal.

In this solution provided in this application, different DMRS port sets (namely, the first DMRS port set and the second DMRS port set) may be respectively mapped to the first time domain position and the second time domain position. Compared with a solution of mapping a same DMRS port set (including a maximum of 12 DMRS ports) to two time domain positions (a front-loaded (front-loaded) DMRS symbol and an additional (additional) DMRS symbol), in this solution, more DMRS ports can be supported. For example, a DMRS port to which the front-loaded DMRS symbol is mapped in a current protocol may be mapped to the first time domain position, and a DMRS port different from the DMRS port to which the front-loaded DMRS symbol is mapped in the current protocol may be mapped to the second time domain position. That is, a DMRS port in the current protocol may be mapped to the first time domain position, and a DMRS port newly added in comparison with the current protocol may be mapped to the second time domain position.

In addition, there may be one or two front-loaded DMRS symbols, and the first time domain position and the second time domain position may each occupy one or two symbols. Therefore, the method provided in this application may control system overheads while supporting more DMRS ports.

With reference to any one of the first aspect to the fourth aspect, in a possible implementation, DMRS ports included in the first DMRS port set and the second DMRS port set are partially the same and partially different; or DMRS ports included in the first DMRS port set and the second DMRS port set are completely different.

With reference to any one of the first aspect to the fourth aspect, in a possible implementation, the first time domain position and the second time domain position are located in a same scheduling time unit. In other words, the first time domain position and the second time domain position correspond to a same scheduling time unit.

With reference to any one of the first aspect to the fourth aspect, in a possible implementation, the first time domain position is used to send a front-loaded (front-loaded) DMRS, and/or the second time domain position is used to send an additional (additional) DMRS.

This means that the first time domain position is the same as a position of the front-loaded DMRS symbol, and/or the second time domain position is the same as a position of the additional DMRS symbol.

Therefore, the first time domain position may be configured in a manner of configuring the front-loaded DMRS symbol, and/or the second time domain position may be configured in a manner of configuring the additional DMRS symbol. In this way, the first time domain position can be configured without modifying the manner of configuring the front-loaded DMRS symbol in the current protocol, and the second time domain position can be configured without modifying the manner of configuring the additional DMRS symbol in the current protocol.

In the current protocol, the front-loaded DMRS symbol may be configured for each slot, and the position of the front-loaded DMRS symbol corresponds to DMRS ports 0 to 11. An existing terminal device may send, on the front-loaded DMRS symbol, a DMRS corresponding to one or more of the DMRS ports 0 to 11. In this application, the scheduling time unit may be a slot, and the first time domain position and the second time domain position may be configured for each slot. The first time domain position may be a front-loaded DMRS symbol, and the second time domain position may be an additional DMRS symbol. If the existing terminal device sends, in the second time domain position, the DMRS sent on the front-loaded DMRS symbol, the existing terminal device may be compatible with the terminal device provided in this application, in other words, the existing terminal device and the terminal device provided in this application may be paired for transmission.

With reference to any one of the first aspect to the fourth aspect, in a possible implementation, the first time domain position and the second time domain position are located in different scheduling time units. In other words, the first time domain position and the second time domain position may correspond to different scheduling time units.

In this solution, DMRSs of different DMRS ports may be carried in different scheduling time units. Compared with a solution in which DMRSs of all DMRS ports are carried in a same scheduling time unit, in this solution, DMRS overheads can be reduced.

With reference to any one of the first aspect to the fourth aspect, in a possible implementation, the first time domain position and the second time domain position each are used to send a front-loaded DMRS.

With reference to any one of the first aspect to the fourth aspect, in a possible implementation, a predefined rule is satisfied between a configuration of the first DMRS port set and/or a configuration of the second DMRS port set and a scheduling time unit.

In a possible implementation, the predefined rule is: only the first DMRS port set is configured in a scheduling time unit that satisfies mod(m, N)=1, and/or only the second DMRS port set is configured in a scheduling time unit that satisfies mod(m, N)=0.

Corresponding to the first aspect and the second aspect, m is an $m^{th}$ scheduling time unit in a plurality of scheduling time units corresponding to a scheduled PUSCH. Corresponding to the third aspect and the fourth aspect, m is an $m^{th}$ scheduling time unit in a plurality of scheduling time units corresponding to a scheduled PDSCH.

Further, in a possible implementation, N is configured or predefined by a system.

Further, in a possible implementation, N is a quantity of the plurality of scheduling time units corresponding to the scheduled PUSCH (or PDSCH). Alternatively, N is a quantity of slots included in a radio frame whose length is 10 ms.

Further, in a possible implementation, N=2.

It may be understood that a larger value of N indicates sparser DMRS sending, in other words, a smaller quantity of symbols occupied for sending the DMRS. In this way, overheads can be reduced.

It should be understood that in this application, when m indicates the $m^{th}$ scheduling time unit in the plurality of scheduling time units corresponding to the scheduled PUSCH (or PDSCH), m=1, 2, ..., that is, a value of m starts from 1.

It should be further understood that in this application, that the first DMRS port set is configured in a scheduling time unit means that the first time domain position or a symbol corresponding to the first time domain position is configured in the scheduling time unit, or the DMRS port included in the first DMR port set is configured. If the first DMRS port set is configured in a scheduling time unit, the DMRS port in the first DMRS port set may be sent or received in the scheduling time unit. If the first DMRS port set is not configured in a scheduling time unit, the DMRS port in the first DMRS port set cannot be sent or received in the scheduling time unit.

Similarly, that the second DMRS port set is configured in a scheduling time unit means that the second time domain position or a symbol corresponding to the second time domain position is configured in the scheduling time unit, or the DMRS port included in the second DMR port set is configured. If the second DMRS port set is configured in a scheduling time unit, the DMRS port in the second DMRS port set may be sent or received in the scheduling time unit. If the second DMRS port set is not configured in a scheduling time unit, the DMRS port in the second DMRS port set cannot be sent or received in the scheduling time unit.

In a possible implementation, the predefined rule is: only the first DMRS port set is configured in a scheduling time unit that satisfies mod(m, N)=0, and/or only the second DMRS port set is configured in a scheduling time unit that satisfies mod(m, N)=1, where m is an index of the scheduling time unit.

Further, in a possible implementation, N is configured or predefined by a system.

It should be understood that in this application, when m indicates the index of the scheduling time unit, m=0, 1, 2, ..., but this is not limited in this application. For example, m=1, 2, 3, ..., that is, a value of m may alternatively start from 1.

In a possible implementation, the predefined rule is: only the first DMRS port set is configured in a scheduling time unit that satisfies mod(m, 2)=1, and/or only the second DMRS port set is configured in a scheduling time unit that satisfies mod(m, 2)=0, where m is an $m^{th}$ scheduling time unit in a plurality of scheduling time units corresponding to a scheduled PUSCH.

In a possible implementation, the predefined rule is: only the first DMRS port set may be configured in a scheduling time unit that satisfies n+2*k*(P+1), and only the second DMRS port set may be configured in a scheduling time unit that satisfies n+(2*k+1)*(P+1), where k=0, 1, 2, 3, 4, ..., n+2*k*(P+1) and n+(2*k+1)*(P+1) each indicate an index of the scheduling time unit, P is an integer greater than or equal to 1, and n is an integer greater than or equal to 0.

In a possible implementation, the predefined rule is: the first DMRS port set and the second DMRS port set are configured in a scheduling time unit that satisfies mod(m, N)=1, where mod() indicates a modulo operation, and N is an integer greater than 1. Corresponding to the first aspect and the second aspect, m is an $m^{th}$ scheduling time unit in a plurality of scheduling time units corresponding to a scheduled PUSCH. Corresponding to the third aspect and the fourth aspect, m is an $m^{th}$ scheduling time unit in a plurality of scheduling time units corresponding to a scheduled PDSCH.

Further, in a possible implementation, N is configured or predefined by a system.

In a possible implementation, the predefined rule is: the first DMRS port set and the second DMRS port set are configured in a scheduling time unit that satisfies mod(m, 2)=0, where m is an index of the scheduling time unit.

In a possible implementation, the predefined rule is: the first DMRS port set and the second DMRS port set are configured in a scheduling time unit that satisfies mod(m, 2)=0. Corresponding to the first aspect and the second aspect, m is an $m^{th}$ scheduling time unit in a plurality of scheduling time units corresponding to a scheduled PUSCH. Corresponding to the third aspect and the fourth aspect, m is an $m^{th}$ scheduling time unit in a plurality of scheduling time units corresponding to a scheduled PDSCH.

In a possible implementation, the predefined rule is: the first DMRS port set and the second DMRS port set are configured in a scheduling time unit that satisfies n+k*(P+1), P is an integer greater than or equal to 1, n+k*(P+1) is an index of the scheduling time unit, k=0, 1, 2, 3, 4, ..., and n is an integer greater than or equal to 0.

With reference to the first aspect to the fourth aspect, in some implementations of the first aspect to the fourth aspect, the first DMRS port set includes DMRS ports whose indexes are 0 to 23; and the second DMRS port set includes DMRS ports whose indexes are 0 to 11 and 24 to 35, the second DMRS port set includes DMRS ports whose indexes are 24 to 35, or the second DMRS port set includes DMRS ports whose indexes are 24 to 47.

With reference to the first aspect to the fourth aspect, in some implementations of the first aspect to the fourth aspect, the scheduling time unit is a slot.

According to a fifth aspect, a DMRS sending method is provided. The method may be performed by a transmitting end device (for example, a terminal device), or may be performed by a chip or a circuit configured in the transmitting end device. This is not limited in this application.

The method includes: receiving indication information, where the indication information indicates a scheduled DMRS port; and sending a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

According to a sixth aspect, a DMRS receiving method is provided. The method may be performed by a receiving end device (for example, a network device), or may be performed by a chip or a circuit configured in the receiving end device. This is not limited in this application.

The method includes: sending indication information, where the indication information indicates a scheduled DMRS port; and receiving a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

According to a seventh aspect, a DMRS receiving method is provided. The method may be performed by a receiving end device (for example, a network device), or may be performed by a chip or a circuit configured in the receiving end device. This is not limited in this application.

The method includes: receiving indication information, where the indication information indicates a scheduled DMRS port; and receiving a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

According to an eighth aspect, a DMRS sending method is provided. The method may be performed by a transmitting end device (for example, a network device), or may be performed by a chip or a circuit configured in the transmitting end device. This is not limited in this application.

The method includes: sending indication information, where the indication information indicates a scheduled DMRS port; and sending a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

With reference to any one of the fifth aspect to the eighth aspect, in a possible implementation, M is an integer greater than 12.

It should be understood that, for any one of the foregoing aspects, the first time domain position, the second time domain position, and the third time domain position may be consecutive in time domain, or at least two of the first time domain position, the second time domain position, and the third time domain position are nonconsecutive in time domain. Quantities of symbols occupied by (or corresponding to) any two of the first time domain position, the second time domain position, and the third time domain position may be equal or unequal. For example, the first time domain position, the second time domain position, and the third time domain position may each occupy two symbols. For example, the first time domain position and the second time domain position each occupy two symbols, and the third time domain position occupies one symbol. In addition, quantities of DMRS ports included in any two of the first DMRS port set, the second DMRS port set, and the third DMRS port set may be equal or unequal. For example, the two DMRS port sets each include 12 DMRS ports.

In this solution provided in this application, different DMRS port sets (namely, the first DMRS port set, the second DMRS port set, and the third DMRS port set) may be respectively mapped to the first time domain position, the second time domain position, and the third time domain position. Compared with a solution of mapping a same DMRS port set (including a maximum of 12 DMRS ports) to two time domain positions (a front-loaded DMRS symbol and an additional DMRS symbol), in this solution, more DMRS ports can be supported. For example, a DMRS port to which the front-loaded DMRS symbol is mapped in a current protocol may be mapped to the first time domain position, and DMRS ports different from the DMRS port to which the front-loaded DMRS symbol is mapped in the current protocol may be mapped to the second time domain position and the third time domain position. That is, a DMRS port in the current protocol may be mapped to the first time domain position, and DMRS ports newly added in comparison with the current protocol may be mapped to the second time domain position and the third time domain position.

In addition, there may be one or two front-loaded DMRS symbols, and the first time domain position, the second time domain position, and the third time domain position may each occupy one or two symbols. Therefore, the method provided in this application may control system overheads while supporting more DMRS ports.

With reference to any one of the fifth aspect to the eighth aspect, in a possible implementation, DMRS ports included in the first DMRS port set, the second DMRS port set, and the third DMRS port set are completely different.

In other words, DMRS ports included in any two of the first DMRS port set, the second DMRS port set, and the third DMRS port set have no intersection set.

With reference to any one of the fifth aspect to the eighth aspect, in a possible implementation, the first time domain position, the second time domain position, and the third time domain position are located in a same scheduling time unit. In other words, the first time domain position, the second time domain position, and the third time domain position correspond to a same scheduling time unit.

With reference to any one of the fifth aspect to the eighth aspect, in a possible implementation, the first time domain position is used to send a front-loaded (front-loaded) DMRS, the second time domain position is used to send the front-loaded DMRS, and/or the third time domain position is used to send the front-loaded DMRS. This means that the first time domain position is the same as a position of the front-loaded DMRS symbol, the second time domain position is the same as the position of the front-loaded DMRS symbol, and/or the third time domain position is the same as the position of the front-loaded DMRS symbol.

Therefore, the first time domain position, the second time domain position, and/or the third time domain position may be configured in a manner of configuring the front-loaded DMRS symbol.

With reference to any one of the fifth aspect to the eighth aspect, in a possible implementation, any two of the first time domain position, the second time domain position, and the third time domain position are located in different scheduling time units. In other words, any two of the first time domain position, the second time domain position, and the third time domain position correspond to different scheduling time units.

In this solution, DMRSs of different DMRS ports may be carried in different scheduling time units. Compared with a solution in which DMRSs of all DMRS ports are carried in a same scheduling time unit, in this solution, DMRS overheads can be reduced.

With reference to any one of the fifth aspect to the eighth aspect, in a possible implementation, the first time domain position, the second time domain position, and the third time domain position each are used to send a front-loaded DMRS.

With reference to any one of the fifth aspect to the eighth aspect, in a possible implementation, a predefined rule is satisfied between a configuration of the first DMRS port set, a configuration of the second DMRS port set, and/or a configuration of the third DMRS port set and a scheduling time unit (for example, a slot).

In a possible implementation, the predefined rule includes one or more of the following:

only the first DMRS port set is configured in a scheduling time unit that satisfies $\mathrm{mod}(m, N)=1$;
only the second DMRS port set is configured in a scheduling time unit that satisfies $\mathrm{mod}(m, N)=2$; or
only the third DMRS port set is configured in a scheduling time unit that satisfies $\mathrm{mod}(m, N)=3$, where
$N$ is a positive integer.

Corresponding to the fifth aspect and the sixth aspect, m is an $m^{\mathrm{th}}$ scheduling time unit in a plurality of scheduling time units corresponding to a scheduled PUSCH. Corresponding to the seventh aspect and the eighth aspect, m is an $m^{\mathrm{th}}$ scheduling time unit in a plurality of scheduling time units corresponding to a scheduled PDSCH. Alternatively, m is an index of the scheduling time unit.

Further, in a possible implementation, N is configured or predefined by a system.

Further, in a possible implementation, N is a quantity of the plurality of scheduling time units corresponding to the scheduled PUSCH (or PDSCH).

Further, in a possible implementation, N is a quantity of slots included in a radio frame whose length is 10 ms.

It may be understood that a larger value of N indicates sparser DMRS sending. In this way, overheads can be reduced.

It should be understood that in this application, that the first DMRS port set is configured in a scheduling time unit means that the first time domain position or a symbol corresponding to the first time domain position is configured in the scheduling time unit, or the DMRS port included in the first DMR port set is configured. If the first DMRS port set is configured in a scheduling time unit, the DMRS port in the first DMRS port set may be sent or received in the scheduling time unit. If the first DMRS port set is not configured in a scheduling time unit, the DMRS port in the first DMRS port set cannot be sent or received in the scheduling time unit.

Similarly, that the second DMRS port set is configured in a scheduling time unit means that the second time domain position or a symbol corresponding to the second time domain position is configured in the scheduling time unit, or the DMRS port included in the second DMR port set is configured. If the second DMRS port set is configured in a scheduling time unit, the DMRS port in the second DMRS port set may be sent or received in the scheduling time unit. If the second DMRS port set is not configured in a scheduling time unit, the DMRS port in the second DMRS port set cannot be sent or received in the scheduling time unit. That the third DMRS port set is configured in a scheduling time unit means that the third time domain position or a symbol corresponding to the third time domain position is configured in the scheduling time unit, or the DMRS port included in the third DMR port set is configured. If the third DMRS port set is configured in a scheduling time unit, the DMRS port in the third DMRS port set may be sent or received in the scheduling time unit. If the third DMRS port set is not configured in a scheduling time unit, the DMRS port in the third DMRS port set cannot be sent or received in the scheduling time unit.

In a possible implementation, the predefined rule includes one or more of the following:

only the first DMRS port set is configured in a scheduling time unit that satisfies mod(m, 3)=0;
only the second DMRS port set is configured in a scheduling time unit that satisfies mod(m, 3)=1; or
only the third DMRS port set is configured in a scheduling time unit that satisfies mod(m, 3)=2.

Corresponding to the fifth aspect and the sixth aspect, m is an $m^{th}$ scheduling time unit in a plurality of scheduling time units corresponding to a scheduled PUSCH. Corresponding to the seventh aspect and the eighth aspect, m is an $m^{th}$ scheduling time unit in a plurality of scheduling time units corresponding to a scheduled PDSCH. Alternatively, m is an index of the scheduling time unit.

In a possible implementation, the predefined rule includes one or more of the following:

only the first DMRS port set is configured in a scheduling time unit that satisfies mod(m, 3)=1;
only the second DMRS port set is configured in a scheduling time unit that satisfies mod(m, 3)=2; or
only the third DMRS port set is configured in a scheduling time unit that satisfies mod(m, 3)=0.

Corresponding to the fifth aspect and the sixth aspect, m is an $m^{th}$ scheduling time unit in a plurality of scheduling time units corresponding to a scheduled PUSCH. Corresponding to the seventh aspect and the eighth aspect, m is an $m^{th}$ scheduling time unit in a plurality of scheduling time units corresponding to a scheduled PDSCH. Alternatively, m is an index of the scheduling time unit.

In a possible implementation, only the first DMRS port set may be configured in a scheduling time unit that satisfies n+2*k*(P+1), only the second DMRS port set may be configured in a scheduling time unit that satisfies n+(2*k+1)*(P+1), and only the third DMRS port set may be configured in a scheduling time unit that satisfies n+(2*k+2)*(P+1), where k=0, 1, 2, 3, 4, ..., n+2*k*(P+1), n+(2*k+1)*(P+1), and n+(2*k+2)*(P+1) each indicate an index of the scheduling time unit, n is an integer greater than or equal to 0, and P is an integer greater than or equal to 1.

In a possible implementation, the predefined rule may be: the first DMRS port set, the second DMRS port set, and the third DMRS port set are configured in a scheduling time unit that satisfies mod(m, N)=1, where mod() indicates a modulo operation. Corresponding to the fifth aspect and the sixth aspect, m is an $m^{th}$ scheduling time unit in a plurality of scheduling time units corresponding to a scheduled PUSCH. Corresponding to the seventh aspect and the eighth aspect, m is an $m^{th}$ scheduling time unit in a plurality of scheduling time units corresponding to a scheduled PDSCH. N is an integer greater than 1.

Further, in a possible implementation, N is configured or predefined by a system.

In a possible implementation, the predefined rule is: the first DMRS port set, the second DMRS port set, and the third DMRS port set are configured in a scheduling time unit that satisfies mod(m, 2)=0, where m is an index of the scheduling time unit.

In a possible implementation, the predefined rule is: the first DMRS port set, the second DMRS port set, and the third DMRS port set are configured in a scheduling time unit that satisfies mod(m, 2)=0. Corresponding to the fifth aspect and the sixth aspect, m is an $m^{th}$ scheduling time unit in a plurality of scheduling time units corresponding to a scheduled PUSCH. Corresponding to the seventh aspect and the eighth aspect, m is an $m^{th}$ scheduling time unit in a plurality of scheduling time units corresponding to a scheduled PDSCH.

With reference to any one of the fifth aspect to the eighth aspect, in a possible implementation, the first DMRS port set includes DMRS ports whose indexes are 0 to 23; the second DMRS port set includes DMRS ports whose indexes are 24 to 35; and the third DMRS port set includes DMRS ports whose indexes are 36 to 47. Alternatively, the first DMRS port set includes DMRS ports whose indexes are 0 to 11; the second DMRS port set includes DMRS ports whose indexes are 13 to 23; and the third DMRS port set includes DMRS ports whose indexes are 24 to 35. Alternatively, the first DMRS port set includes DMRS ports whose indexes are 0 to 11; the second DMRS port set includes DMRS ports whose indexes are 13 to 23; and the third DMRS port set includes DMRS ports whose indexes are 24 to 47.

With reference to any one of the fifth aspect to the eighth aspect, in a possible implementation, the scheduling time unit is a slot.

According to a ninth aspect, a communication apparatus is provided, and includes each module or unit configured to perform the method in the first aspect, the third aspect, the fifth aspect, the seventh aspect, or any possible implementation of the first aspect, the third aspect, the fifth aspect, or the seventh aspect.

According to a tenth aspect, a communication apparatus is provided, and includes each module or unit configured to perform the method in the second aspect, the fourth aspect, the sixth aspect, the eighth aspect, or any possible implementation of the second aspect, the fourth aspect, the sixth aspect, or the eighth aspect.

According to an eleventh aspect, a communication apparatus is provided, and includes a processor. The processor is coupled to a memory, and may be configured to execute instructions in the memory, to enable the communication apparatus to perform the method in the first aspect, the third aspect, the fifth aspect, the seventh aspect, or any possible implementation of the first aspect, the third aspect, the fifth aspect, or the seventh aspect. Optionally, the communication apparatus further includes the memory. Optionally, the communication apparatus further includes an interface circuit, and the processor is coupled to the interface circuit.

According to a twelfth aspect, a communication apparatus is provided, and includes a processor. The processor is coupled to a memory, and may be configured to execute instructions in the memory, to enable the communication apparatus to perform the method in the second aspect, the fourth aspect, the sixth aspect, the eighth aspect, or any possible implementation of the second aspect, the fourth aspect, the sixth aspect, or the eighth aspect. Optionally, the communication apparatus further includes the memory. Optionally, the communication apparatus further includes an interface circuit, and the processor is coupled to the interface circuit.

According to a thirteenth aspect, a processor is provided, and includes: an input circuit, an output circuit, and a processing circuit. The processing circuit is configured to: receive a signal by using the input circuit, and transmit the signal by using the output circuit, to enable the processor to perform the method in the first aspect, the third aspect, the fifth aspect, the seventh aspect, or any possible implementation of the first aspect, the third aspect, the fifth aspect, or the seventh aspect.

In a specific implementation process, the processor may be a chip, the input circuit may be an input pin, the output circuit may be an output pin, and the processing circuit may be a transistor, a gate circuit, a trigger, various logic circuits, or the like. The input signal received by the input circuit may be received and input by, for example, but not limited to, a receiver, the signal output by the output circuit may be, for example, but not limited to, output to the transmitter and transmitted by the transmitter, and the input circuit and the output circuit may be a same circuit. The circuit is used as an input circuit and an output circuit at different moments. Specific implementations of the processor and various circuits are not limited in this embodiment of this application.

According to a fourteenth aspect, a processor is provided, and includes: an input circuit, an output circuit, and a processing circuit. The processing circuit is configured to: receive a signal by using the input circuit, and transmit the signal by using the output circuit, to enable the processor to perform the method in the second aspect, the fourth aspect, the sixth aspect, the eighth aspect, or any possible implementation of the second aspect, the fourth aspect, the sixth aspect, or the eighth aspect.

In a specific implementation process, the processor may be a chip, the input circuit may be an input pin, the output circuit may be an output pin, and the processing circuit may be a transistor, a gate circuit, a trigger, various logic circuits, or the like. The input signal received by the input circuit may be received and input by, for example, but not limited to, a receiver, the signal output by the output circuit may be, for example, but not limited to, output to the transmitter and transmitted by the transmitter, and the input circuit and the output circuit may be a same circuit. The circuit is used as an input circuit and an output circuit at different moments. Specific implementations of the processor and various circuits are not limited in this embodiment of this application.

According to a fifteenth aspect, a processing apparatus is provided, and includes a processor and a memory. The processor is configured to: read instructions stored in the memory, receive a signal by using a receiver, and transmit the signal by using a transmitter, to perform the method in any one of the first aspect to the eighth aspect or the possible implementations of the first aspect to the eighth aspect.

The processing apparatus in the fifteenth aspect may be a chip, and the processor may be implemented by using hardware or software. When being implemented by using hardware, the processor may be a logic circuit, an integrated circuit, or the like. When being implemented by using software, the processor may be a general-purpose processor, and is implemented by reading software code stored in a memory. The memory may be integrated into the processor, or may be located outside the processor, and exists independently.

According to a sixteenth aspect, a computer program product is provided, and the computer program product includes: a computer program (which may also be referred to as code or instructions), and when the computer program is run, a computer is enabled to perform the method in any one of the first aspect to the eighth aspect or the possible implementations of the first aspect to the eighth aspect.

According to a seventeenth aspect, a computer-readable medium is provided. The computer-readable medium stores a computer program (which may also be referred to as code or instructions), and when the computer program is run on a computer, the computer is enabled to perform the method in any one of the first aspect to the eighth aspect or the possible implementations of the first aspect to the eighth aspect.

According to an eighteenth aspect, a communication system is provided, and includes at least one terminal device and at least one network device, to perform the method in any possible implementation of the first aspect to the eighth aspect.

**BRIEF DESCRIPTION OF DRAWINGS**

FIG. 1 is a schematic diagram of a communication system according to an embodiment of this application;
FIG. 2 shows pilot patterns of two configuration types in a current standard;
FIG. 3 is a schematic flowchart of a DMRS sending method according to an embodiment of this application;
FIG. 4 to FIG. 12 show several examples of time domain positions according to embodiments of this application;
FIG. 13 to FIG. 25 show several examples of DMRS patterns according to embodiments of this application;
FIG. 26 is a schematic flowchart of another DMRS sending method according to an embodiment of this application;
FIG. 27 is a schematic diagram of a communication apparatus according to an embodiment of this application;
FIG. 28 is a schematic diagram of a network device according to an embodiment of this application; and
FIG. 29 is a schematic diagram of a terminal device according to an embodiment of this application.

**DESCRIPTION OF EMBODIMENTS**

Technical solutions in embodiments of this application may be applied to various communication systems, for example, a long term evolution (long term evolution, LTE) system, an LTE frequency division duplex (FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5$^{th}$ generation (5$^{th}$ generation, 5G) system, or a new radio (new radio, NR) system.

A terminal device in embodiments of this application may be user equipment (user equipment, LTE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. The network device may alternatively be a module or a unit that implements some functions of the base station, for example, may be a central unit (central unit, CU), or may be a distributed unit (distributed unit, DU). A specific technology and a specific device form used by the network device are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), a memory (also referred to as a main memory), and the like. The operating system may be any one or more types of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or the network device, or may be performed by a function module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

Before the solutions of this application are described, the following several points are described.

(1) A symbol (symbol) in this application refers to an orthogonal frequency division multiplexing (orthogonal frequency division multiplexing, OFDM) symbol.

(2) A scheduling time unit in this application may refer to a minimum scheduling unit in time domain. For example, in a 4G system, the scheduling time unit may be a subframe. In a 5G system, the scheduling time unit may be a slot (slot), a mini-slot (mini-slot), or the like. With system evolution, the scheduling time unit may alternatively be a minimum scheduling unit in a new system.

For ease of description, for example, "X" in a "scheduling time unit X" below indicates an index (or a number) of the scheduling time unit. In other words, the "scheduling time unit X" indicates a scheduling time unit whose index is X. For example, the scheduling time unit X indicates a scheduling time unit whose index is X in a radio frame (10 ms). For example, assuming that the scheduling time unit is a slot, a slot 2 indicates a slot whose index is 2 in a radio frame.

Similarly, "X" in a "symbol X" indicates an index of the symbol in a scheduling time unit (for example, in a slot). In other words, the "symbol X" indicates a symbol whose index is X in a scheduling time unit. For example, a symbol 0 indicates a symbol whose index is 0 in a scheduling time unit.

Similarly, "X" in a "DMRS port X" indicates an index (or a DMRS port number) of the DMRS port. In other words, the "DMRS port X" indicates a DMRS port whose index is X. For example, a DMRS port 0 indicates a DMRS port whose index is 0.

It should be noted that, an index of a scheduling time unit (for example, an index of a scheduling time unit in a radio frame), an index of a symbol in a scheduling time unit, and an index of a DMRS port may each start from 0, 1, or another number. This is not limited in this application. For ease of understanding and description, in this application, that an index of a scheduling time unit, an index of a symbol in a scheduling time unit, and an index of a DMRS port each start from 0 is used as an example for description. However, this shall not constitute any limitation on this application.

(3) A resource block (resource block) in this application refers to 12 consecutive subcarriers in frequency domain. A resource element (resource element) refers to a subcarrier in frequency domain and a symbol in time domain.

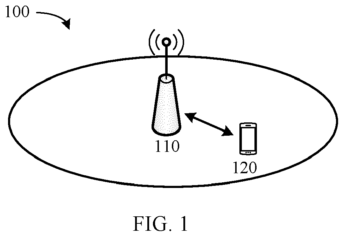

For ease of understanding embodiments of this application, a communication system applicable to embodiments of this application is first described in detail with reference to FIG. 1.

FIG. 1 is a schematic diagram of a communication system applicable to an embodiment of this application. As shown in FIG. 1, the communication system 100 may include at least one network device (for example, a network device 110) and at least one terminal device (for example, a terminal device 120). Usually, sending information by the network device to the terminal device is referred to as downlink (downlink, DL) communication, and sending information by the terminal device to the network device is referred to as uplink (uplink, UL) communication. In uplink communication, the terminal device may send a demodulation reference signal to the network device, where the demodulation reference signal is used for data demodulation on a PUSCH. In downlink communication, the network device may send a demodulation reference signal to the terminal device, where the demodulation reference signal is used for data demodulation on a physical downlink shared channel (physical downlink shared channel, PDSCH). The demodulation reference signal is referred to as a DMRS in an LTE protocol or an NR protocol, and may also have another name in a future protocol. In this application, for ease of description, the demodulation reference signal is collectively referred to as a DMRS.

The following briefly describes time-frequency domain positions of the DMRS in a current technology.

1. Time domain position of the DMRS

DMRSs may be classified into a front-loaded (front-loaded) DMRS and an additional (additional) DMRS based on different time domain positions of the DMRSs. A symbol corresponding to (or occupied by) the front-loaded DMRS may be referred to as a front-loaded DMRS symbol, and a symbol corresponding to the additional DMRS may be referred to as an additional DMRS symbol.

There are one or more front-loaded DMRS symbols, and a start position of the front-loaded DMRS symbol may or may not be the first symbol in a scheduling time unit or in a symbol corresponding to a scheduled PUSCH (or PDSCH). The additional DMRS symbol is one or more symbols after the front-loaded DMRS symbol, and the last symbol in the front-loaded DMRS symbol and the first symbol in the additional DMRS symbol are nonconsecutive. In addition, no additional DMRS may be configured, or one or more groups of additional DMRSs may be configured. In addition, a pilot pattern of each group of additional DMRSs is a repetition of the front-loaded DMRSs. To be specific, each additional DMRS in each group of additional DMRSs and each of the front-loaded DMRSs occupy a same subcarrier and a same quantity of symbols.

2. Frequency domain position of the DMRS

There are two DMRS configuration types: a configuration type 1 (configuration Type 1) and a configuration type 2 (DMRS configuration Type 2). A DMRS position in frequency domain is determined based on the two configuration types. The configuration type 1 uses a comb plus orthogonal cover code (orthogonal cover code, OCC) structure, and the configuration type 2 uses a frequency division plus OCC structure. The configuration type 1 and the configuration type 2 may each correspond to a single-symbol (single-symbol) case and a double-symbol (double-symbol) case.

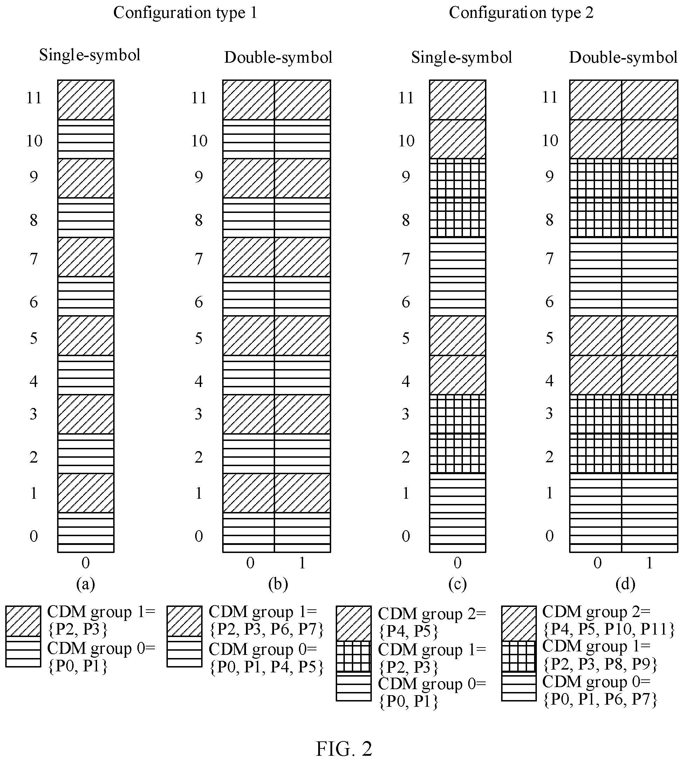

FIG. 2 shows pilot patterns of the two configuration types. In FIG. 2, resource elements (resource elements, REs) with different filling patterns indicate different CDM groups (CDM groups). P0, P1, ..., and P11 successively indicates a DMRS port 0 to a DMRS port 11. A number on a horizontal axis indicates an index of a symbol in a slot, and a number on a vertical axis indicates an index of a subcarrier in a resource block (resource block, RB). In FIG. 2, that the DMRS occupies a symbol 0 and that the DMRS occupies symbols 0 and 1 are merely examples. During actual implementation, the DMRS may alternatively occupy another symbol in a slot, for example, occupy a symbol 1, or occupy symbols 1 and 2.

Refer to (a) in FIG. 2. For a configuration type 1 of one symbol, each CDM group supports a maximum of two orthogonal DMRS ports, and two CDM groups support a maximum of four orthogonal DMRS ports.

Refer to (b) in FIG. 2. For a configuration type 1 of two symbols, each CDM group supports a maximum of four orthogonal DMRS ports, and two CDM groups support a maximum of eight orthogonal DMRS ports.

Refer to (c) in FIG. 2. For a configuration type 2 of one symbol, each CDM group supports a maximum of two orthogonal DMRS ports, and three CDM groups support a maximum of six orthogonal DMRS ports.

Refer to (d) in FIG. 2. For a configuration type 2 of two symbols, each CDM group supports a maximum of four orthogonal DMRS ports, and three CDM groups support a maximum of 12 orthogonal DMRS ports.

For a correspondence between an index of a DMRS port, a CDM group, and OCC code, refer to Table 1 or section 6.4.1.1.3 in TS 38.211.

**Table 1**

| $\tilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

$\tilde{p}$ indicates the index of the DMRS port, $\lambda$ indicates an index of the CDM group, $\Delta$ indicates a subcarrier offset, $w_f(k')$ indicates frequency domain OCC, and $w_t(l')$ indicates the frequency domain OCC.

In a current technology, OCC of an additional DMRS is a repetition of front-loaded OCC. In other words, for a same DMRS port, OCC of an additional DMRS of the DMRS port is the same as front-loaded OCC.

It can be learned that a current protocol supports a limited quantity of orthogonal DMRS ports, to be specific, supports a maximum of 12 orthogonal DMRS ports. This causes a limited system capacity. To increase the system capacity, more orthogonal DMRS ports need to be supported.

In view of this, this application provides a DMRS sending method and a DMRS receiving method. Different DMRS port sets are respectively mapped to at least two time domain positions, so that more orthogonal DMRS ports can be supported, thereby helping improve the system capacity.

The technical solutions provided in this application may be applied to downlink communication, or may be applied to uplink communication. The following mainly uses downlink communication as an example to describe the methods provided in this application in detail.

It should be understood that, when a corresponding method is described, some steps are described by using a case in which the steps are performed by a terminal device (an example of a transmitting end device), and some other steps are described by using a case in which the steps are performed by a network device (an example of a receiving end device). However, this is merely for ease of description of the illustrated method. The steps performed by the terminal device may alternatively be implemented by a component (for example, a chip or a circuit) of the terminal device. Similarly, the steps performed by the network device may alternatively be implemented by a component (for example, a chip or a circuit) of the network device.

It should be further understood that, in this application, the terminal device and/or the network device may perform some or all of the steps in embodiments of this application. The steps or operations are merely examples. In embodiments of this application, other operations or variations of various operations may be further performed. In addition, the steps may be performed in different sequences presented in embodiments of this application, and it is possible that not all operations in embodiments of this application need to be performed.

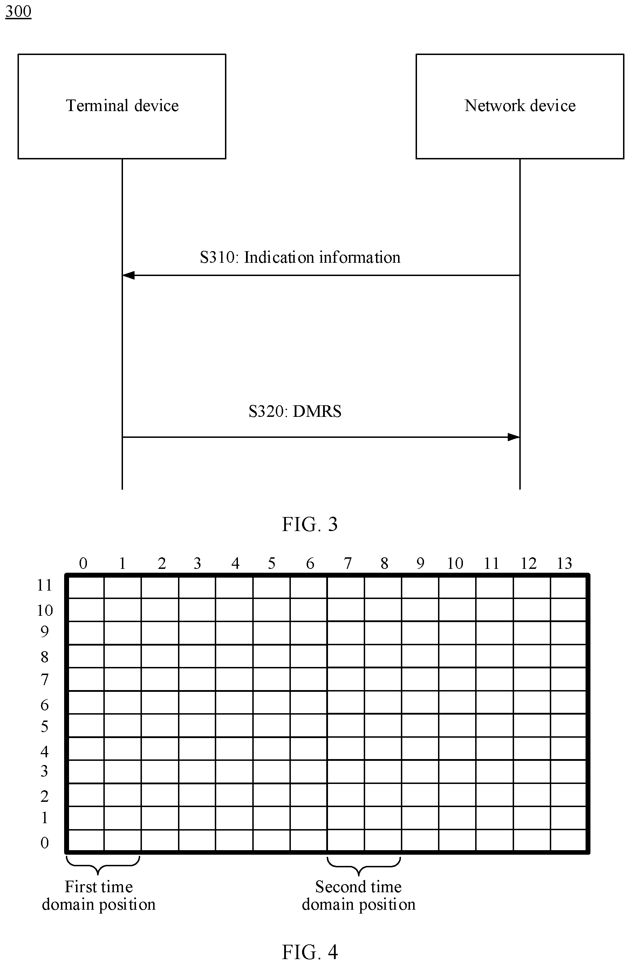

FIG. 3 is a schematic diagram of a DMRS sending method according to this application. The following uses an example in which a transmitting end device is a terminal device and a receiving end device is a network device, to describe in detail steps in the method 300 shown in FIG. 3.

S310: The network device sends indication information to the terminal device. Correspondingly, the terminal device receives the indication information from the network device.

The indication information indicates a scheduled DMRS port, or the indication information indicates a DMRS port configured by the network device. For example, the indication information may be sent by using downlink control information (downlink control information, DCI).

The scheduled DMRS port belongs to a DMRS port set, and the DMRS port set includes M DMRS ports. That is, the scheduled DMRS port is one or more of the M DMRS ports. The M DMRS ports may be DMRS ports that can be supported by a system at most. For example, M is an integer greater than 12.

The M DMRS ports may correspond to R time domain positions, in other words, the M DMRS ports may be mapped to the R time domain positions, where R is an integer greater than or equal to 2. For example, the M DMRS ports may be mapped to two time domain positions or three time domain positions. Each time domain position occupies or corresponds to one or more consecutive symbols, and quantities of symbols occupied by any two time domain positions may be equal or unequal. The R time domain positions may be located in a same scheduling time unit, or may be located in different scheduling time units.

In addition, each time domain position corresponds to one DMRS port set. In other words, the R time domain positions correspond to R DMRS port sets. Any two of the R DMRS port sets are different, in other words, the R DMRS port sets are different from each other. Each DMRS port set includes a plurality of DMRS ports, for example, includes 6, 12, or 24 DMRS ports, and quantities of DMRS ports included in any two DMRS port sets may be equal or may unequal.

It should be understood that introduction of a DMRS set in this application is only to facilitate descriptions of a relationship between a DMRS port corresponding to one time domain position and DMRS ports corresponding to different time domain positions. During actual implementation, there may be no concept of a set. However, for a feature of the DMRS port corresponding to one time domain position, for example, a quantity of DMRS ports or a DMRS time-frequency position pattern, refer to descriptions of a feature of a corresponding DMRS set in this application.

S320: The terminal device sends a DMRS on the scheduled DMRS port. Correspondingly, the network device receives the DMRS from the terminal device on the scheduled DMRS port.

It should be understood that sending (or receiving) the DMRS may also be referred to as sending (or receiving) a DMRS sequence or sending (or receiving) the DMRS port.

According to the DMRS transmission method provided in this application, different DMRS port sets (for example, a first DMRS port set and a second DMRS port set) are respectively mapped to at least two time domain positions (for example, a first time domain position and a second time domain position). Compared with a solution of mapping a same DMRS port set (including a maximum of 12 DMRS ports) to two time domain positions (a front-loaded DMRS symbol and an additional DMRS symbol), in this solution, more DMRS ports can be supported. For example, a DMRS port to which the front-loaded DMRS symbol is mapped in a current protocol may be mapped to the first time domain position, and a DMRS port different from the DMRS port to which the front-loaded DMRS symbol is mapped in the current protocol may be mapped to the second time domain position. That is, DMRS ports (for example, DMRS ports 0 to 11) in the current protocol may be mapped to the first time domain position, and DMRS ports (for example, DMRS ports 12 to 23) newly added in comparison with the current protocol may be mapped to the second time domain position.

The following describes the R time domain positions and the R DRMS port sets in detail. It should be understood that in FIG. 4 to FIG. 25 in the following, a number on a horizontal axis indicates an index of a symbol in a slot, and a number on a vertical axis indicates an index of a subcarrier in an RB. In addition, in the figures, an example in which a slot includes 14 symbols is used for description. During actual implementation, a quantity of symbols included in a slot may not be 14, and may be, for example, 12. This case is also applicable to this application.

(1) The R time domain positions are described.

Case 1

The R time domain positions are located in a same scheduling time unit. In other words, the R time domain positions correspond to a same scheduling time unit. For example, the scheduling time unit is a slot, and the R time domain positions may be located in a same slot.

Two time domain positions that are closest to each other in time domain and that are in the R time domain positions may be consecutive in time domain, or may be nonconsecutive in time domain.

Further, this solution is applicable to a common scheduling scenario, namely, a scenario in which a scheduled PUSCH corresponds to a scheduling time unit, for example, a scenario in which the scheduled PUSCH corresponds to a slot. It should be understood that, that a PUSCH corresponds to a scheduling time unit means that a time domain resource corresponding to the PUSCH includes only one or more symbols in the scheduling time unit.

This solution is further described below by using examples in which R=2 and R=3.

When R=2, in this specification, for ease of understanding and description, the two time domain positions corresponding to the M DMRS ports are respectively denoted as: a first time domain position and a second time domain position.

The first time domain position and the second time domain position may be located in a same scheduling time unit. For example, the first time domain position and the second time domain position may be located in a same slot.

It should be understood that quantities of symbols occupied by the first time domain position and the second time domain position may be equal or unequal. For example, the first time domain position and the second time domain position may each occupy two symbols; or the first time domain position occupies one symbol, and the second time domain position occupies two symbols.

Optionally, the first time domain position and the second time domain position may be nonconsecutive in time domain.

To be specific, if the first time domain position is located before the second time domain position in time domain, there may be an interval of one or more symbols between the last symbol corresponding to the first time domain position and the first symbol corresponding to the second time domain position. If the first time domain position is located after the second time domain position in time domain, there may be an interval of one or more symbols between the last symbol corresponding to the second time domain position and the first symbol corresponding to the first time domain position.

For example, that the scheduling time unit is a slot is used as an example. Refer to FIG. 4. The first time domain position may occupy symbols 0 and 1 (namely, the first symbol and the second symbol) in a slot, and the second time domain position may occupy symbols 7 and 8 (namely, the eighth symbol and the ninth symbol) in the slot.

Optionally, the first time domain position and the second time domain position may be consecutive in time domain.

In other words, the first time domain position and the second time domain position may jointly occupy a plurality of consecutive symbols in a scheduling time unit.

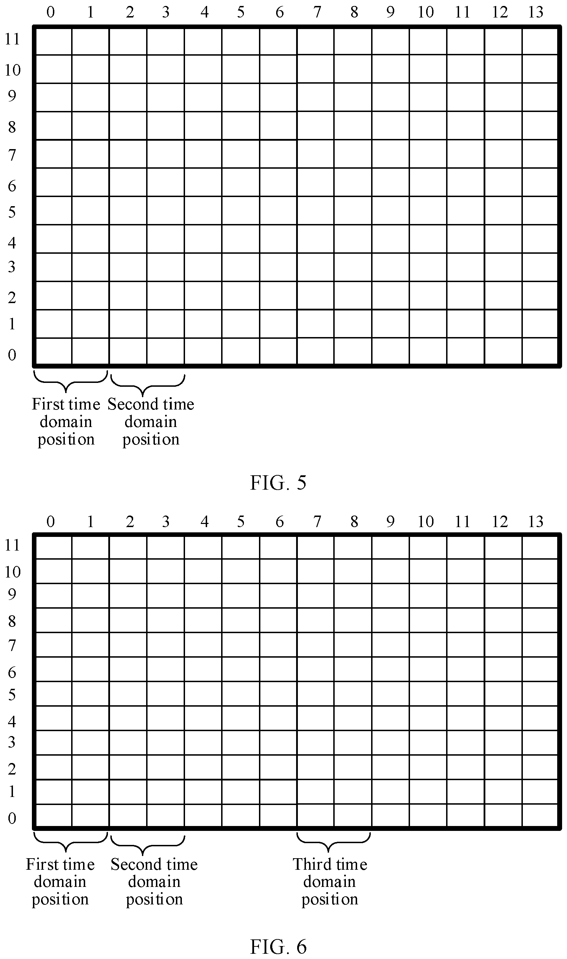

For example, that the scheduling time unit is a slot is used as an example. Refer to FIG. 5. The first time domain position may occupy the first symbol and the second symbol in a slot, and the second time domain position may occupy the third symbol and the fourth symbol in the slot. In this case, the first symbol to the fourth symbol are consecutive symbols.

For example, the first time domain position is used to send a front-loaded DMRS. In other words, the first time domain position may be a front-loaded DMRS symbol.

Further, for how to configure the first time domain position, refer to a configuration of the front-loaded DMRS symbol in a conventional technology.

For example, the second time domain position is used to send an additional DMRS. In other words, the second time domain position may be an additional DMRS symbol.

Further, for how to configure the second time domain position, refer to a configuration of the additional DMRS symbol in the conventional technology.

The first time domain position may be configured in a manner of configuring the front-loaded DMRS symbol, and/or the second time domain position may be configured in a manner of configuring the additional DMRS symbol. Therefore, the first time domain position can be configured without modifying the manner of configuring the front-loaded DMRS symbol in the current protocol, and the second time domain position can be configured without modifying the manner of configuring the additional DMRS symbol in the current protocol. In another aspect, in the current protocol, the front-loaded DMRS symbol may be configured for each slot, and a position of the front-loaded DMRS symbol corresponds to DMRS ports 0 to 11. An existing terminal device may send, on the front-loaded DMRS symbol, a DMRS corresponding to one or more of the DMRS ports 0 to 11. In this application, the scheduling time unit may be a slot, and the first time domain position and the second time domain position may be configured for each slot. The first time domain position may be a front-loaded DMRS symbol, and the second time domain position may be an additional DMRS symbol. If the existing terminal device sends, in the second time domain position, the DMRS sent on the front-loaded DMRS symbol, the existing terminal device may be compatible with the terminal device provided in this application, in other words, the existing terminal device and the terminal device provided in this application may be paired for transmission.

When R=3, in this specification, for ease of understanding and description, the three time domain positions corresponding to the M DMRS ports are respectively denoted as: a first time domain position, a second time domain position, and a third time domain position.

The first time domain position, the second time domain position, and the third time domain position may be located in a same scheduling time unit. In other words, the first time domain position, the second time domain position, and the third time domain position may correspond to a same scheduling time unit. For example, the scheduling time unit is a slot, and the first time domain position, the second time domain position, and the third time domain position may be located in a same slot.

It should be understood that quantities of symbols occupied by any two of the first time domain position, the second time domain position, and the third time domain position may be equal or unequal. For example, the first time domain position, the second time domain position, and the third time domain position may each occupy two symbols. Alternatively, the first time domain position occupies one symbol, the second time domain position occupies two symbols, and the third time domain position occupies two symbols. Alternatively, the first time domain position occupies one symbol, the second time domain position occupies two symbols, and the third time domain position occupies three symbols.

Optionally, at least two of the first time domain position, the second time domain position, and the third time domain position may be nonconsecutive in time domain.

For example, only two of the first time domain position, the second time domain position, and the third time domain position are consecutive in time domain. For example, that the scheduling time unit is a slot is used as an example. Refer to FIG. 6. The first time domain position may occupy symbols 0 and 1 in a slot, the second time domain position may occupy symbols 2 and 3 in the slot, and the third time domain position may occupy symbols 7 and 8 in the slot. In other words, the first time domain position and the second time domain position are consecutive in time domain, and the second time domain position and the third time domain position are nonconsecutive in time domain.

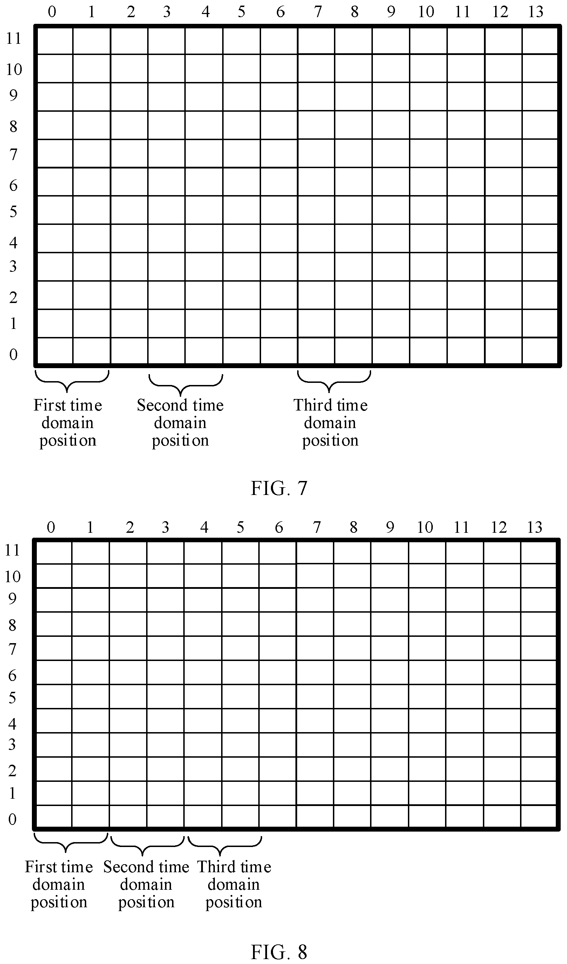

For example, any two of the first time domain position, the second time domain position, and the third time domain position are nonconsecutive in time domain. For example, that the scheduling time unit is a slot is used as an example. Refer to FIG. 7. The first time domain position may occupy symbols 0 and 1 in a slot, the second time domain position may occupy symbols 3 and 4 in the slot, and the third time domain position may occupy symbols 7 and 8 in the slot.

Optionally, the first time domain position, the second time domain position, and the third time domain position may be consecutive in time domain.

For example, that the scheduling time unit is a slot is used as an example. Refer to FIG. 8. The first time domain position may occupy symbols 0 and 1 in a slot, the second time domain position may occupy symbols 2 and 3 in the slot, and the third time domain position may occupy symbols 4 and 5 in the slot.

Case 2

The R time domain positions are located in different scheduling time units.

This means that the R time domain positions correspond to R scheduling time units. For example, the scheduling time unit is a slot, and the R time domain positions correspond to R slots.

In this solution, DMRSs of different DMRS ports may be carried in different scheduling time units. Compared with a solution in which DMRSs of all DMRS ports are carried in a same scheduling time unit, in this solution, DMRS overheads can be reduced.

Further, this solution is applicable to a scenario in which a scheduled PUSCH corresponds to a plurality of scheduling time units, for example, a scenario in which the scheduled PUSCH corresponds to a plurality of slots. It should be understood that, that a PUSCH corresponds to a plurality of scheduling time units means that a time domain resource corresponding to the scheduled PUSCH includes one or more symbols in each of the plurality of scheduling time units.

Similarly, this solution is further described below by using examples in which R=2 and R=3 .

When R=2, the first time domain position and the second time domain position may be located in different scheduling time units. For example, the first time domain position and the second time domain position may be located in different slots.

It should be understood that quantities of symbols occupied by the first time domain position and the second time domain position may be equal or unequal. For example, the first time domain position and the second time domain position may each occupy two symbols; or the first time domain position occupies one symbol, and the second time domain position occupies two symbols.

It should be further understood that the first time domain position and the second time domain position may correspond to symbols with a same index in different scheduling time units, or the first time domain position and the second time domain position may correspond to symbols with different indexes in different scheduling time units.

Optionally, the scheduling time unit corresponding to the first time domain position and the scheduling time unit corresponding to the second time domain position may be consecutive in time domain.

In other words, the scheduling time unit corresponding to the first time domain position and the scheduling time unit corresponding to the second time domain position are two adjacent scheduling time units.

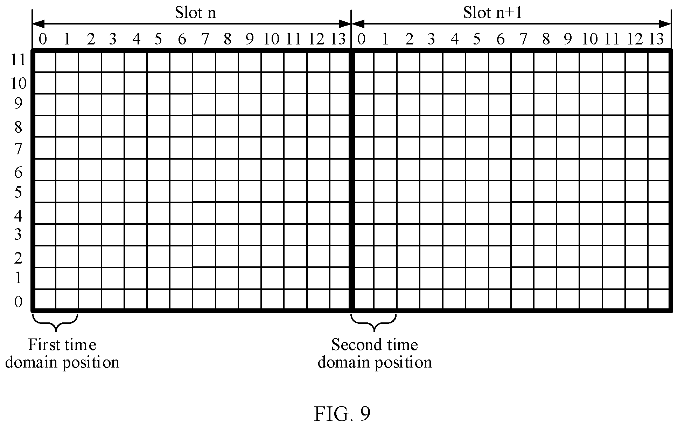

For example, that the scheduling time unit is a slot is used as an example. Refer to FIG. 9. The first time domain position may correspond to symbols 0 and 1 in a slot n, and the second time domain position may correspond to symbols 0 and 1 in a slot n+1.

Optionally, the scheduling time unit corresponding to the first time domain position and the scheduling time unit corresponding to the second time domain position may be nonconsecutive in time domain.

In other words, the scheduling time unit corresponding to the first time domain position and the scheduling time unit corresponding to the second time domain position are two scheduling time units that are not adjacent. In other words, there is an interval of one or more scheduling time units between the scheduling time unit corresponding to the first time domain position and the scheduling time unit corresponding to the second time domain position.

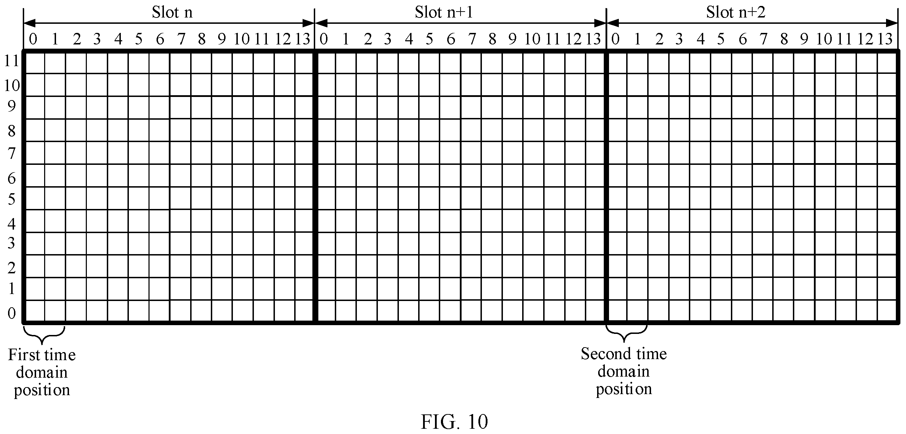

For example, that the scheduling time unit is a slot is used as an example. Refer to FIG. 10. The first time domain position may correspond to symbols 0 and 1 in a slot n, and the second time domain position may correspond to symbols 0 and 1 in a slot n+2.

For example, the first time domain position is used to send a front-loaded DMRS. In other words, the first time domain position may be a front-loaded DMRS symbol.

For example, the second time domain position is used to send the front-loaded DMRS. In other words, the second time domain position may be a front-loaded DMRS symbol.

Further, for how to configure the front-loaded DMRS symbol, refer to a configuration of the front-loaded DMRS symbol in a conventional technology.

When R=3, the first time domain position, the second time domain position, and the third time domain position may be located in different scheduling time units.

This means that any two of the first time domain position, the second time domain position, and the third time domain position may correspond to different scheduling time units. For example, the scheduling unit is a slot, and a slot corresponding to the first time domain position, a slot corresponding to the second time domain position, and a slot corresponding to the third time domain position are different from each other.

In this solution, DMRSs of different DMRS ports may be carried in different scheduling time units. Compared with a solution in which DMRSs of all DMRS ports are carried in a same scheduling time unit, in this solution, DMRS overheads can be reduced.

It should be understood that quantities of symbols occupied by any two of the first time domain position, the second time domain position, and the third time domain position may be equal or unequal. For example, the first time domain position, the second time domain position, and the third time domain position may each occupy two symbols. Alternatively, the first time domain position occupies one symbol, the second time domain position occupies two symbols, and the third time domain position occupies two symbols. Alternatively, the first time domain position occupies one symbol, the second time domain position occupies two symbols, and the third time domain position occupies three symbols.

It should be further understood that at least two of the first time domain position, the second time domain position, and the third time domain position may correspond to symbols with a same index in different scheduling time units, or the first time domain position, the second time domain position, and the third time domain position may correspond to symbols with different indexes in different scheduling time units.

Optionally, the scheduling time unit corresponding to the first time domain position, the scheduling time unit corresponding to the second time domain position, and the scheduling time unit corresponding to the third time domain position may be consecutive in time domain.

In other words, the scheduling time unit corresponding to the first time domain position, the scheduling time unit corresponding to the second time domain position, and the scheduling time unit corresponding to the third time domain position are three adjacent scheduling time units.

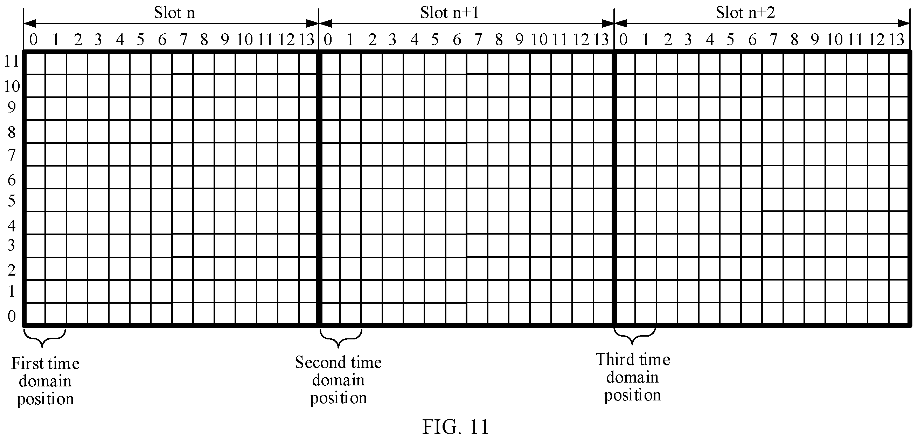

For example, that the scheduling time unit is a slot is used as an example. Refer to FIG. 11. The first time domain position may correspond to symbols 0 and 1 in a slot n, the second time domain position may occupy symbols 0 and 1 in a slot n+1, and the third time domain position may correspond to symbols 0 and 1 in a slot n+2.

Optionally, at least two of the scheduling time unit corresponding to the first time domain position, the scheduling time unit corresponding to the second time domain position, and the scheduling time unit corresponding to the third time domain position may be nonconsecutive in time domain.

In other words, at least two of the scheduling time unit corresponding to the first time domain position, the scheduling time unit corresponding to the second time domain position, and the scheduling time unit corresponding to the third time domain position are not adjacent scheduling time units.

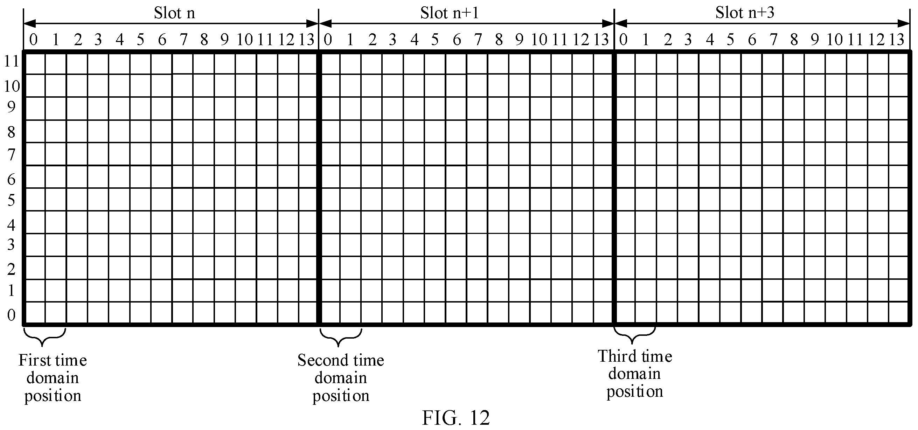

For example, that the scheduling time unit is a slot is used as an example. Refer to FIG. 12. The first time domain position may correspond to symbols 0 and 1 in a slot n, the second time domain position may correspond to symbols 0 and 1 in a slot n+1, and the third time domain position may correspond to symbols 0 and 1 in a slot n+3. It should be understood that the first time domain position, the second time domain position, and the third time domain position are not configured in a slot n+2 that is not shown in FIG. 12. That is, no DMRS port is mapped to the slot n+2.

For another example, that the scheduling time unit is a slot is used as an example. The first time domain position may correspond to symbols 0 and 1 in a slot n, the second time domain position may correspond to symbols 0 and 1 in a slot n+2, and the third time domain position may correspond to symbols 0 and 1 in a slot n+4.

For example, the first time domain position is used to send a front-loaded DMRS. In other words, the first time domain position may be a front-loaded DMRS symbol.

For example, the second time domain position is used to send the front-loaded DMRS. In other words, the second time domain position may be a front-loaded DMRS symbol.

For example, the third time domain position is used to send the front-loaded DMRS. In other words, the first time domain position may be a front-loaded DMRS symbol.

Further, for how to configure the front-loaded DMRS symbol, refer to a configuration of the front-loaded DMRS symbol in the conventional technology.

(2) The R DMRS port sets are described.

Similarly, the R DMRS port sets are described by using examples in which R=2 and R=3 .

When R=2, in this specification, for ease of understanding and description, a DMRS port set corresponding to the first time domain position and a DMRS port set corresponding to the second time domain position are respectively denoted as: a first DMRS port set and a second DMRS port set.

It should be understood that a quantity of DMRS ports included in the first DMRS port set and a quantity of DMRS ports included in the second DMRS port set may be equal or unequal. For example, the first DMRS port set may include 12 DMRS ports, and the second DMRS port set may include 6, 12, or 24 DMRS ports. Alternatively, the first DMRS port set may include 24 DMRS ports, and the second DMRS port set may include 6, 12, or 24 DMRS ports. Alternatively, the first DMRS port set may include six DMRS ports, and the second DMRS port set may include 12 or 24 DMRS ports.

Optionally, the DMRS ports included in the first DMRS port set and the second DMRS port set are partially the same and partially different. In other words, the DMRS ports included in the first DMRS port set and the second DMRS port set are not exactly the same and have an intersection set.

For example, the second DMRS port set includes some or all of the DMRS ports in the first DMRS port set and a DMRS port that is in the M DMRS ports and that does not belong to the first DMRS port set. Alternatively, the first DMRS port set includes some or all of the DMRS ports in the second DMRS port set and a DMRS port that is in the M DMRS ports and that does not belong to the second DMRS port set.

For example, M=24. The first DMRS port set may include DMRS ports 0 to 11 (in other words, the first DMRS port set includes only the DMRS ports 0 to 11), and the second DMRS port set may include DMRS ports 0 to 23 (in other words, the second DMRS port set includes only the DMRS ports 0 to 23). Alternatively, the first DMRS port set may include DMRS ports 0 to 23, and the second DMRS port set may include DMRS ports 0 to 11.

Alternatively, the first DMRS port set may include DMRS ports 0 to 11, and the second DMRS port set may include DMRS ports 0 to 5 and DMRS ports 12 to 23. Alternatively, the first DMRS port set may include DMRS ports 0 to 5 and DMRS ports 12 to 23, and the second DMRS port set may include DMRS ports 0 to 11.

For example, M=36, the first DMRS port set may include DMRS ports 0 to 11, and the second DMRS port set may include DMRS ports 0 to 11 and DMRS ports 24 to 35. Alternatively, the second DMRS port set may include DMRS ports 0 to 11 and DMRS ports 24 to 35, and the second DMRS port may include DMRS ports 0 to 11.

Alternatively, the first DMRS port set may include DMRS ports 0 to 23, and the second DMRS port set may include DMRS ports 0 to 11 and DMRS ports 24 to 35. Alternatively, the second DMRS port set may include DMRS ports 0 to 11 and DMRS ports 24 to 35, and the second DMRS port may include DMRS ports 0 to 23.

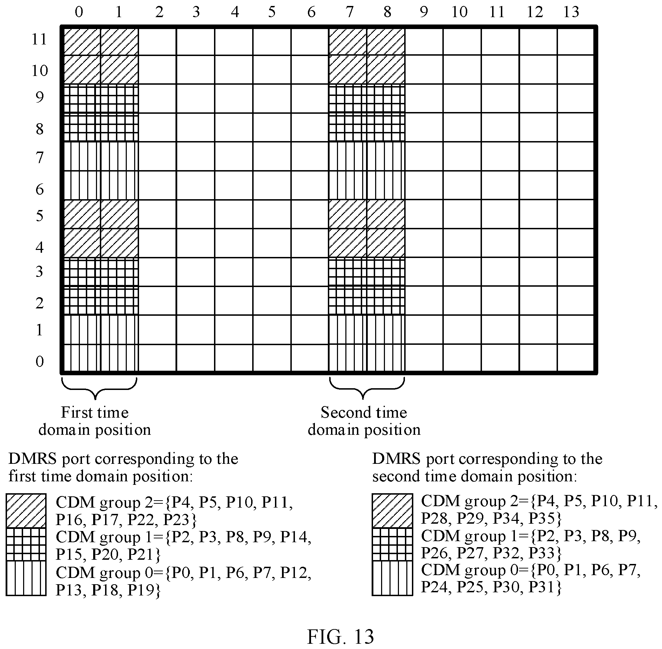

To make a person skilled in the art better understand this application, that the scheduling time unit is a slot is used as an example. FIG. 13 to FIG. 15 show several examples in which a first DMRS port set and a second DMRS port set are different and have an intersection set. In the several examples, the first DMRS port set includes DMRS ports 0 to 23, and the second DMRS port set includes DMRS ports 0 to 11 and DMRS ports 24 to 35.

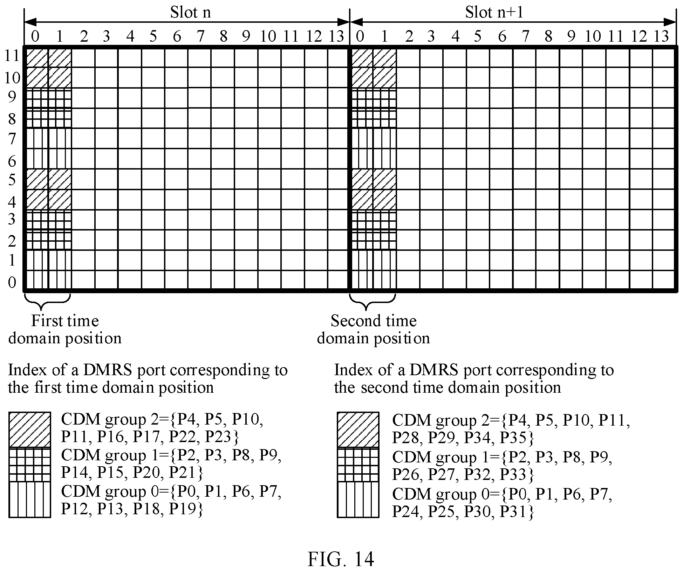

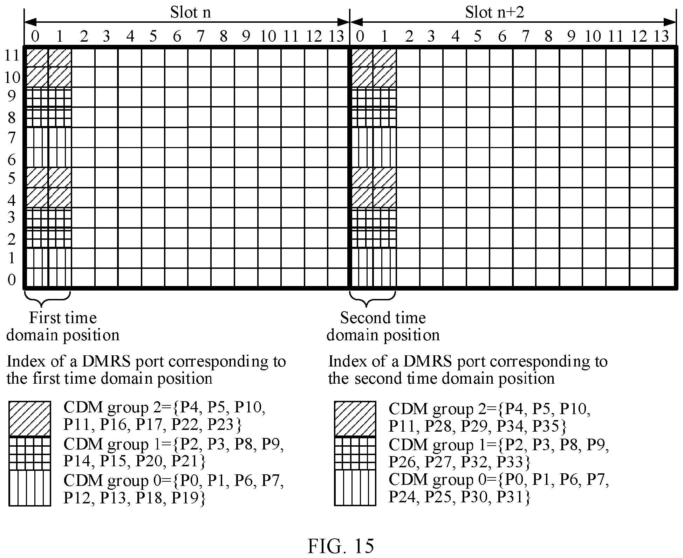

DMRS patterns shown in FIG. 13 to FIG. 15 each support a maximum of 36 DMRS ports, that is, M=36. The 36 DMRS ports correspond to three CDM groups, and each CDM group supports 12 DMRS ports. In addition, each of three CDM groups corresponding to a first time domain position corresponds to eight REs, and the eight REs correspond to eight DMRS ports. Each of three CDM groups corresponding to a second time domain position corresponds to eight REs, and the eight REs correspond to eight DMRS ports. In the DMRS pattern shown in FIG. 13, the first time domain position and the second time domain position are located in a same slot, and the first time domain position and the second time domain position are nonconsecutive in time domain. In the DMRS pattern shown in FIG. 14, the first time domain position and the second time domain position are located in different slots, and a slot occupied by the first time domain position and a slot occupied by the second time domain position are consecutive in time domain. In the DMRS pattern shown in FIG. 15, the first time domain position and the second time domain position are located in different slots, and a slot occupied by the first time domain position and a slot occupied by the second time domain position are nonconsecutive in time domain. It should be understood that no DMRS port is mapped to a slot n+1 that is not shown in FIG. 15.

It should be noted that in this application, DMRS ports 0 to 11 are DMRS ports in an existing protocol, and DMRS ports 12 to 47 are newly introduced DMRS ports. The newly introduced DMRS ports may be represented by using new indexes, for example, may be represented by using indexes 12 to 47. However, this is not limited in this application. For example, the newly introduced DMRS ports may alternatively be represented by using indexes 24 to 59.

Optionally, the DMRS ports included in the first DMRS port set and the second DMRS port set are completely different. In other words, the DMRS ports included in the first DMRS port set and the second DMRS port set have no intersection set.

For example, M=24. The first DMRS port set may include DMRS ports 0 to 11, and the second DMRS port set may include DMRS ports 12 to 23. Alternatively, the first DMRS port set may include DMRS ports 12 to 23, and the second DMRS port set may include DMRS ports 0 to 11.

For example, M=36. The first DMRS port set may include DMRS ports 0 to 11, and the second DMRS port set may include DMRS ports 12 to 35. Alternatively, the first DMRS port set may include DMRS ports 12 to 35, and the second DMRS port set may include DMRS ports 0 to 11.

Alternatively, the first DMRS port set may include DMRS ports 0 to 23, and the second DMRS port set may include DMRS ports 24 to 35. Alternatively, the first DMRS port set may include DMRS ports 24 to 35, and the second DMRS port set may include DMRS ports 0 to 23.

For example, M=48. The first DMRS port set may include DMRS ports 0 to 23, and the second DMRS port set may include DMRS ports 24 to 47. Alternatively, the first DMRS port set may include DMRS ports 24 to 47, and the second DMRS port set may include DMRS ports 0 to 23.

Alternatively, the first DMRS port set may include a DMRS port whose index is an odd number, and the second DMRS port set may include a DMRS port whose index is an even number. Alternatively, the first DMRS port set may include a DMRS port whose index is an even number, and the second DMRS port set may include a DMRS port whose index is an odd number.

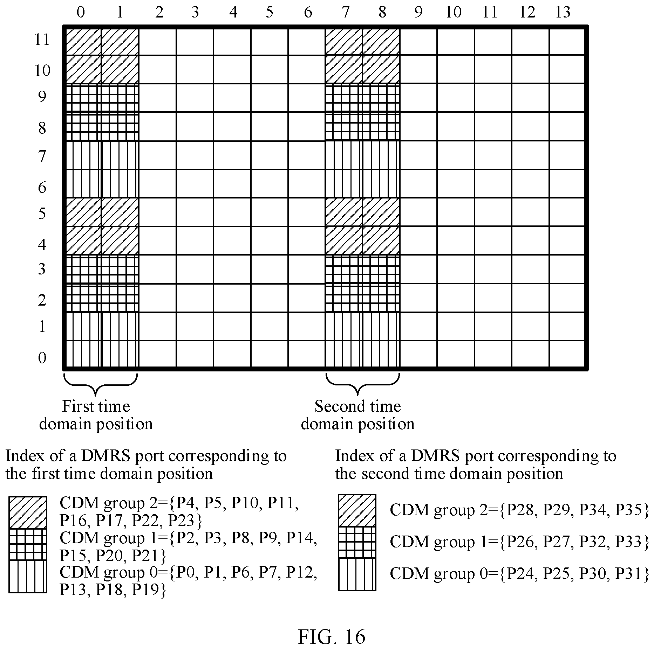

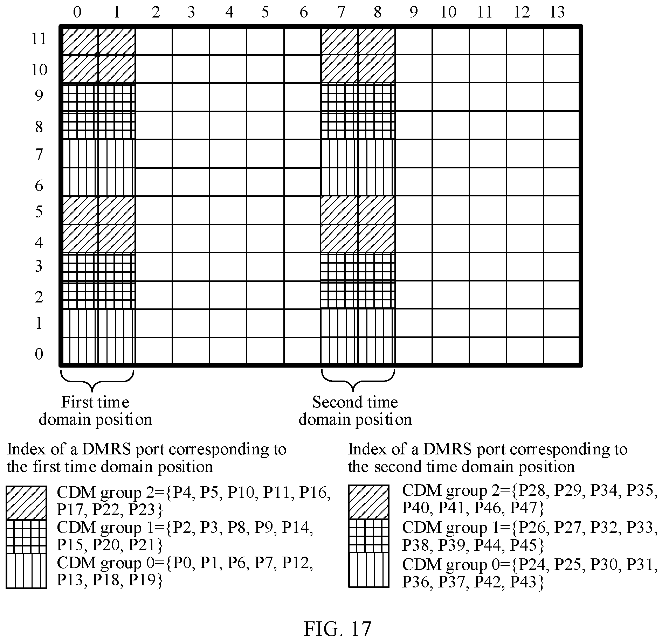

To make a person skilled in the art better understand this application, that the scheduling time unit is a slot is used as an example. FIG. 16 to FIG. 23 show several examples in which a first DMRS port set and a second DMRS port set have no intersection set. In DMRS patterns shown in FIG. 16, FIG. 18, FIG. 20, and FIG. 22, the first DMRS port set includes DMRS ports 0 to 23, and the second DMRS port set includes DMRS ports 24 to 35. In DMRS patterns shown in FIG. 17, FIG. 19, FIG. 21, and FIG. 23, the first DMRS port set includes DMRS ports 0 to 23, and the second DMRS port set includes DMRS ports 24 to 47.

The DMRS patterns shown in FIG. 16, FIG. 18, FIG. 20, and FIG. 22 each support a maximum of 36 DMRS ports, that is, M=36. The 36 DMRS ports correspond to three CDM groups, and each CDM group supports 12 DMRS ports. In addition, each of three CDM groups corresponding to a first time domain position corresponds to eight REs, and the eight REs correspond to eight DMRS ports. Each of three CDM groups corresponding to a second time domain position corresponds to eight REs, four of the eight REs are consecutive, the other four REs are nonconsecutive, and the four consecutive REs correspond to four ports. A CDM group 0 corresponding to the second time domain position in FIG. 16 is used as an example. Four REs whose frequency domain positions are subcarriers 0 and 1 and whose time domain positions are symbols 7 and 8 correspond to the DMRS ports 24, 25, 30, and 31. Four REs whose frequency domain positions are subcarriers 6 and 7 and whose time domain positions are symbols 7 and 8 also correspond to the DMRS ports 24, 25, 30, and 31. DMRSs corresponding to the DMRS ports corresponding to the four REs whose frequency domain positions are subcarriers 6 and 7 and whose time domain positions are symbols 7 and 8 are actually repetitions of DMRSs corresponding to the DMRS ports corresponding to the four REs whose frequency domain positions are subcarriers 0 and 1 and whose time domain positions are symbols 7 and 8.

The DMRS patterns shown in FIG. 17, FIG. 19, FIG. 21, and FIG. 23 each support a maximum of 48 DMRS ports, that is, M=48. The 48 DMRS ports correspond to three CDM groups, and each CDM group supports 16 DMRS ports. In addition, each CDM group corresponding to a first time domain position corresponds to eight REs, and the eight REs correspond to eight DMRS ports. Each CDM group corresponding to a second time domain position corresponds to eight REs, and the eight REs correspond to eight DMRS ports.

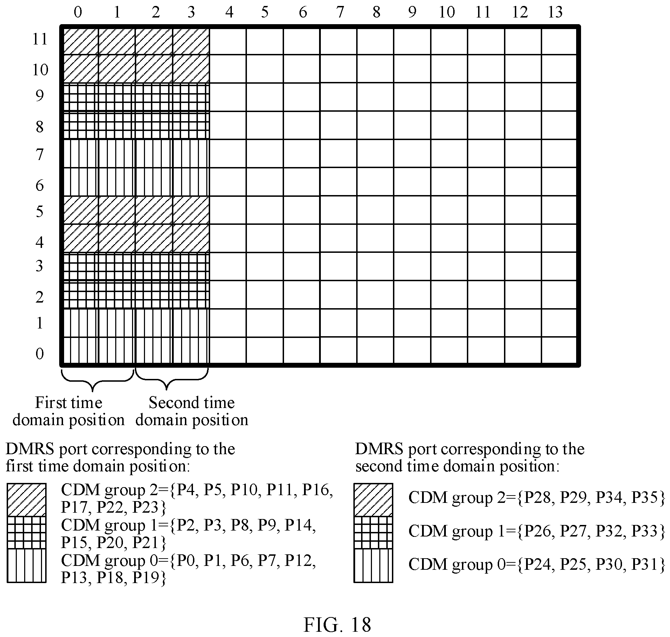

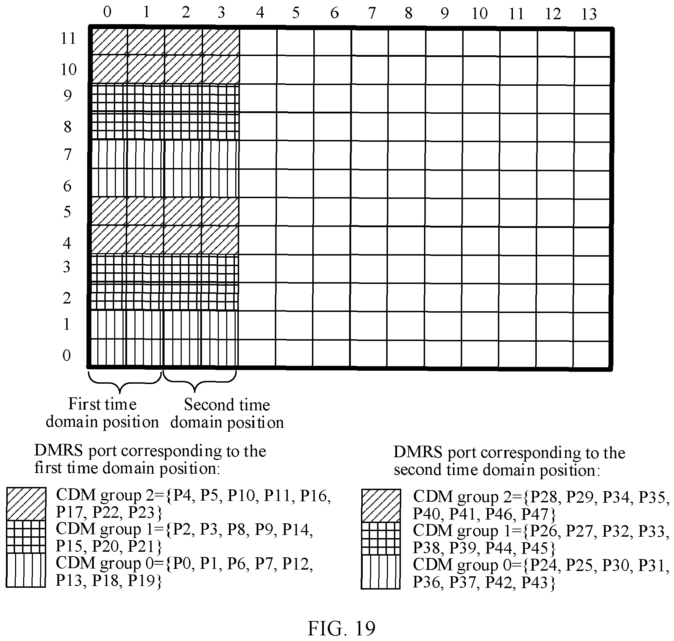

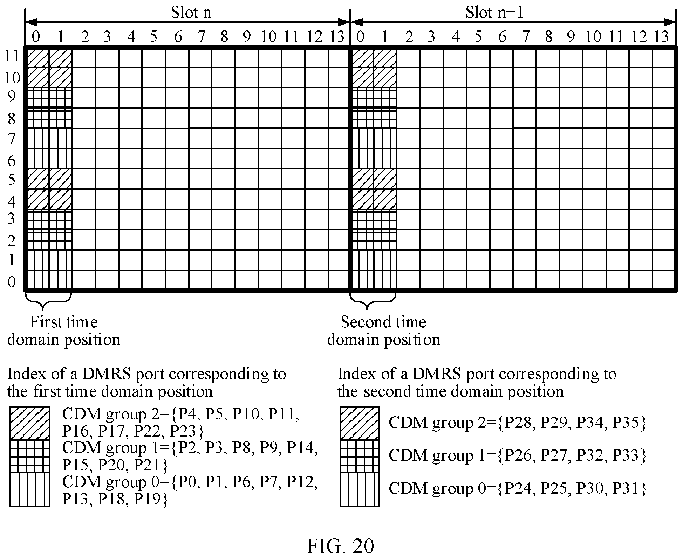

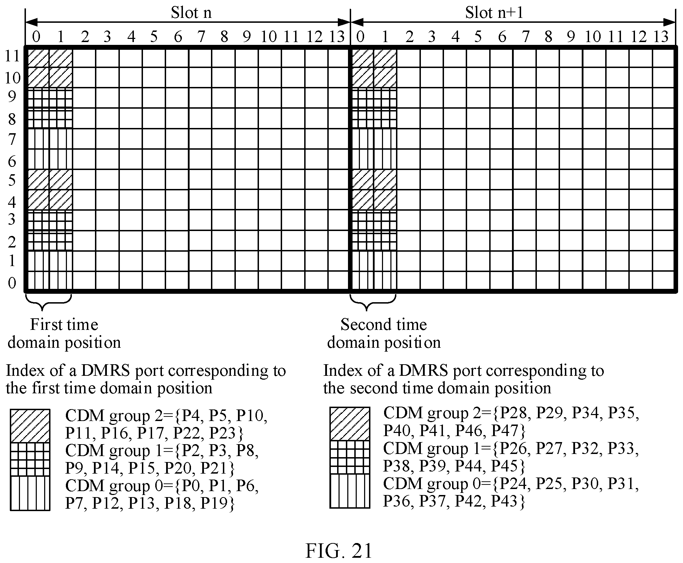

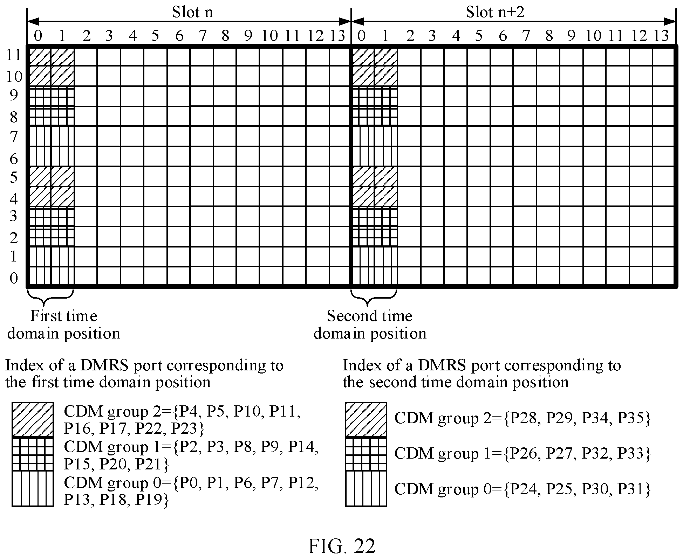

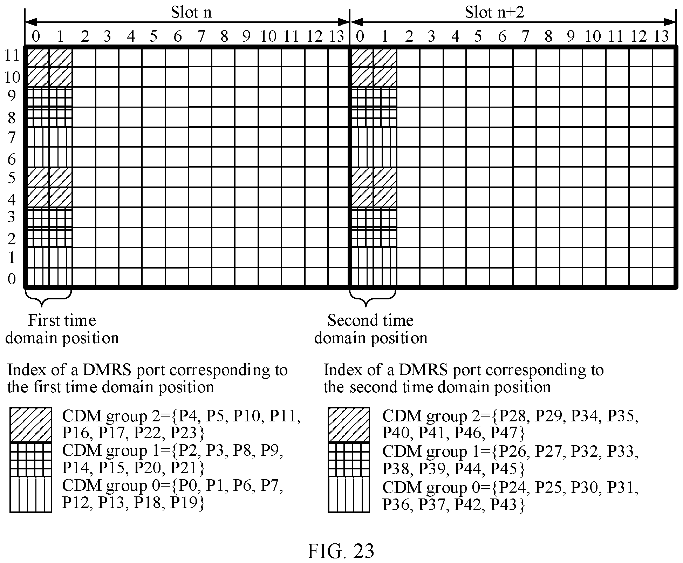

In the DMRS patterns shown in FIG. 16 and FIG. 17, the first time domain position and the second time domain position are located in a same slot, and the first time domain position and the second time domain position are nonconsecutive in time domain. In the DMRS patterns shown in FIG. 18 and FIG. 19, the first time domain position and the second time domain position are located in a same slot, and the first time domain position and the second time domain position are consecutive in time domain. In the DMRS patterns shown in FIG. 20 and FIG. 21, the first time domain position and the second time domain position are located in different slots, and a slot corresponding to the first time domain position and a slot corresponding to the second time domain position are consecutive in time domain. In the DMRS patterns shown in FIG. 22 and FIG. 23, the first time domain position and the second time domain position are located in different slots, and a slot corresponding to the first time domain position and a slot corresponding to the second time domain position are nonconsecutive in time domain. It should be understood that no DMRS port is mapped to a slot n+1 that is not shown in FIG. 22 and FIG. 23.

In a possible implementation, a predefined rule is satisfied between a configuration of the first DMRS port set and/or a configuration of the second DMRS port set and the scheduling time unit, which may also be understood as that the predefined rule is satisfied between a configuration of the first time domain position and/or a configuration of the second time domain position and the scheduling time unit. In other words, it may be determined, according to the predefined rule, whether the first time domain position is configured in the scheduling unit or the first DMRS port set can be mapped to the scheduling unit, and/or whether the second time domain position is configured in the scheduling unit or the second DMRS port set can be mapped to the scheduling unit.

For a situation in which this solution is applied to the case in which the first time domain position and the second time domain position correspond to different scheduling time units and a situation in which this solution is applied to the case in which the first time domain position and the second time domain position correspond to a same scheduling time unit, the following separately describes the predefined rule by using examples.

(1) This solution is applied to the case in which the first time domain position and the second time domain position correspond to different scheduling time units.

Example 1

The predefined rule may be: Only the first DMRS port set is configured in a scheduling time unit that satisfies mod(m, N)=1, and/or only the second DMRS port set is configured in a scheduling time unit that satisfies mod(m, N)=2. In other words, only the first DMRS port set is configured, and the second DMRS port set is not configured in the scheduling time unit that satisfies mod(m, N)=1, and/or only the second DMRS port set is configured, and the first DMRS port set is not configured in the scheduling time unit that satisfies mod(m, N)=2, where mod() indicates a modulo operation, m is an $m^{th}$ scheduling time unit in a plurality of scheduling time units corresponding to a scheduled PUSCH, and N is an integer greater than 1.

It should be understood that in this application, when m indicates the $m^{th}$ scheduling time unit in the plurality of scheduling time units corresponding to the scheduled PUSCH, m=1, 2, ..., that is, a value of m starts from 1.

It should be further understood that, in this application, configuring a first DMRS set may alternatively be understood as configuring the first time domain position, and configuring a second DMRS set may alternatively be understood as configuring the second time domain position.

Further, N may be configured or predefined by a system.

For example, N may be a quantity of the plurality of scheduling time units corresponding to the scheduled PUSCH.

For example, assuming that the scheduled PUSCH corresponds to four scheduling time units, N=4. In this case, in the four scheduling time units, only the first DMRS port set may be configured in the first scheduling time unit, only the second DMRS port set may be configured in the second scheduling time unit, and no DMRS port may be configured in the third scheduling time unit or the fourth scheduling time unit.

For another example, N may be a quantity of scheduling time units included in a radio frame whose length is 1 0 ms. For example, N may be a quantity of slots included in the radio frame whose length is 10 ms.

For still another example, a value of N may be configured by using radio resource control (radio resource control, RRC) signaling or downlink control information (downlink control information, DCI). Alternatively, a value set may be configured by using RRC signaling, and a specific value of N in the value set is indicated by DCI. For example, different values of N are indicated by different status values of a field. For example, if the value set configured by using the RRC signaling is {4, 8}, a value of M may be indicated by one bit in the DCI. For example, when a bit value is 0, it indicates that N=4; or when a bit value is 1, it indicates that N=8.

It may be understood that, when the quantity of scheduling time units corresponding to the scheduled PUSCH is greater than N, a larger value of N indicates sparser DMRS sending. In this case, for a slowly changing channel, DMRS overheads are reduced while channel estimation performance is almost not affected.

Example 2

The predefined rule may be: Only the first DMRS port set is configured in a scheduling time unit that satisfies mod(m, 2)=0, and/or only the second DMRS port set is configured in a scheduling time unit that satisfies mod(m, 2)=1, where m is an index of the scheduling time unit.

In other words, only the first DMRS port set may be configured in a scheduling time unit whose index is an even number, and/or only the second DMRS port set may be configured in a scheduling time unit whose index is an odd number.

It should be understood that in this application, when m indicates the index of the scheduling time unit, m=0, 1, 2, ..., that is, a value of m may start from 0, but this is not limited in this application. For example, m=1, 2, 3, ..., that is, a value of m may alternatively start from 1.

Example 3

The predefined rule may be: Only the first DMRS port set is configured in a scheduling time unit that satisfies mod(m, 2)=1, and/or only the second DMRS port set is configured in a scheduling time unit that satisfies mod(m, 2)=0, where m is an $m^{th}$ scheduling time unit in a plurality of scheduling time units corresponding to a scheduled PUSCH.

In other words, in the plurality of scheduling time units corresponding to the scheduled PUSCH, only the first DMRS port set may be configured in an odd-numbered scheduling time unit, and/or only the second DMRS port set may be configured in an even-numbered scheduling time unit.

Example 4

The predefined rule may be: There is an interval of P scheduling time units between a scheduling time unit in which only the first DMRS port set is configured and a scheduling time unit in which only the second DMRS port set is configured, where P is a positive integer. In addition, only the first DMRS port set or only the second DMRS port set may be configured in a scheduling time unit 0, namely, a scheduling time unit whose index is 0; or only the first DMRS port set or only the second DMRS port set may be configured in the first scheduling time unit in a plurality of scheduling time units corresponding to a scheduled PUSCH.

For example, only the first DMRS port set may be configured in a scheduling time unit n+2*k*(P+1), and only the second DMRS port set may be configured in a scheduling time unit n+(2*k+1)*(P+1), where k=0, 1, 2, 3, 4, ..., and n is an integer greater than or equal to 0, and n+2*k*(P+1) and n+(2*k+1)*(P+1) each indicate an index of the scheduling time unit.

(2) This solution is applied to the case in which the first time domain position and the second time domain position correspond to a same scheduling time unit.

Example 1

The predefined rule may be: The first DMRS port set and the second DMRS port set are configured in a scheduling time unit that satisfies mod(m, N)=1. In other words, the first DMRS port set and the second DMRS port set are configured in the scheduling time unit that satisfies mod(m, N)=1, and the first DMRS port set and the second DMRS port set are not configured in a scheduling time unit that does not satisfy mod(m, N)=1, where mod() indicates a modulo operation, m is an $m^{th}$ scheduling time unit in a plurality of scheduling time units corresponding to a scheduled PUSCH, and N is an integer greater than 1.

Further, N may be configured or predefined by a system.

For example, N is a quantity of the plurality of scheduling time units corresponding to the scheduled PUSCH.

For example, assuming that the scheduled PUSCH corresponds to four scheduling time units, N=4. In this case, in the four scheduling time units, the first DMRS port set and the second DMRS port set may be configured in the first scheduling time unit, and no DMRS port may be configured in the second scheduling time unit, the third scheduling time unit, or the fourth scheduling time unit.

For another example, N may be a quantity of scheduling time units (for example, slots) included in a radio frame whose length is 10 ms.

For still another example, a value of N may be configured by using RRC signaling or DCI. In another manner, a value set may be configured by using RRC signaling, and a specific value of N in the value set is indicated by DCI. For example, different values of N are indicated by different status values of a field. For example, if the value set configured by using the RRC signaling is {4, 8}, a value of M may be indicated by one bit in the DCI. For example, when a bit value is 0, it indicates that N=4; or when a bit value is 1, it indicates that N=8.

It may be understood that, when the quantity of scheduling time units corresponding to the scheduled PUSCH is greater than N, a larger value of N indicates sparser DMRS sending. In this case, for a slowly changing channel, DMRS overheads are reduced while channel estimation performance is almost not affected.

Example 2

The predefined rule may be: The first DMRS port set and the second DMRS port set are configured in a scheduling time unit that satisfies mod(m, 2)=0, where m is an index of the scheduling time unit.

In other words, the first DMRS port set and the second DMRS port set are configured in a scheduling time unit whose index is an even number, and the first DMRS port set and the second DMRS port set are not configured in a scheduling time unit whose index is an odd number.

Alternatively, the predefined rule may be: The first DMRS port set and the second DMRS port set are configured in a scheduling time unit that satisfies mod(m, 2)=1, where m is an index of the scheduling time unit.

In other words, the first DMRS port set and the second DMRS port set are configured in a scheduling time unit whose index is an odd number, and the first DMRS port set and the second DMRS port set are not configured in a scheduling time unit whose index is an even number.

Example 3

The predefined rule may be: The first DMRS port set and the second DMRS port set are configured in a scheduling time unit that satisfies mod(m, 2)=0, where m is an $m^{th}$ scheduling time unit in a plurality of scheduling time units corresponding to a scheduled PUSCH.

In other words, in the plurality of scheduling time units corresponding to the scheduled PUSCH, the first DMRS port set and the second DMRS port set are configured in an even-numbered scheduling time unit, and the first DMRS port set and the second DMRS port set are not configured in an odd-numbered scheduling time unit.

Alternatively, the predefined rule may be: The first DMRS port set and the second DMRS port set are configured in a scheduling time unit that satisfies mod(m, 2)=1, where m is an $m^{th}$ scheduling time unit in a plurality of scheduling time units corresponding to a scheduled PUSCH.

In other words, in the plurality of scheduling time units corresponding to the scheduled PUSCH, the first DMRS port set and the second DMRS port set are configured in an odd-numbered scheduling time unit, and the first DMRS port set and the second DMRS port set are not configured in an even-numbered scheduling time unit.

Example 4

The predefined rule may be: The first DMRS port set and the second DMRS port set are configured at an interval of P scheduling time units, where P is a positive integer.

In other words, there is an interval of P scheduling time units between two scheduling data units that are closest to each other in time domain and that are configured with the first DMRS port set and the second DMRS port set. For example, the first DMRS port set and the second DMRS port set are configured in a scheduling time unit n+k*(P+1), and the first DMRS port set and the second DMRS port set are not configured in another scheduling time unit, where k=0, 1, 2, 3, 4, ..., n is an integer greater than or equal to 0, and n+k*(P+1) indicates an index of the scheduling time unit.

For example, assuming that P=2 and n=0, the first DMRS port set and the second DMRS port set may be configured in scheduling time units 0, 3, 6, 9, ..., and the first DMRS port set and the second DMRS port set may not be configured in another scheduling time unit.

Alternatively, the predefined rule may be: In a plurality of scheduling time units corresponding to a scheduled PUSCH, the first DMRS port set and the second DMRS port set are configured at an interval of P scheduling time units, where P is a positive integer.

For example, in the plurality of scheduling time units corresponding to the scheduled PUSCH, the first DMRS port set and the second DMRS port set are configured in a $[1+k*(P+1)]^{th}$ scheduling time unit, and the first DMRS port set and the second DMRS port set are not configured in another scheduling time unit, where k=0, 1, 2, 3, 4, ..., n+k*(P+1)≤m, m is a quantity of scheduling time units corresponding to the scheduled PUSCH, and n is an integer greater than or equal to 0.

For example, assuming that P=2 and m=5, in five scheduling time units corresponding to the scheduled PUSCH, the first DMRS port set and the second DMRS port set may be configured in the first scheduling time unit and the fourth scheduling time unit, and the first DMRS port set and the second DMRS port set may not be configured in another scheduling time unit.

When R=3, in this specification, for ease of understanding and description, a DMRS port set corresponding to the first time domain position, a DMRS port set corresponding to the second time domain position, and a DMRS port set corresponding to the third time domain position are respectively denoted as: a first DMRS port set, a second DMRS port set, and a third DMRS port set.

It should be understood that quantities of DMRS ports included in any two of the three DMRS port sets may be equal or unequal. For example, the first DMRS port set may include 6, 12, or 24 DMRS ports, the second DMRS port set may include 6, 12, or 24 DMRS ports, and the third DMRS port set may include 6, 12, or 24 DMRS ports.

Optionally, the DMRS ports included in at least two of the first DMRS port set, the second DMRS port set, and the third DMRS port set are partially the same and partially different.

For example, the first DMRS port set may include DMRS ports 0 to 11, the second DMRS port set may include 0 to 23, and the third DMRS port set may include DMRS ports 24 to 35.

For another example, the first DMRS port set may include DMRS ports 0 to 11, the second DMRS port set may include 0 to 23, and the third DMRS port set may include DMRS ports 0 to 5 and 24 to 35.

Optionally, the DMRS ports included in any two of the first DMRS port set, the second DMRS port set, and the third DMRS port set are completely different.

For example, the first DMRS port set may include DMRS ports 0 to 11, the second DMRS port set may include 12 to 23, and the third DMRS port set may include DMRS ports 24 to 35.

For another example, the first DMRS port set may include DMRS ports 0 to 11, the second DMRS port set may include 12 to 23, and the third DMRS port set may include DMRS ports 24 to 47.

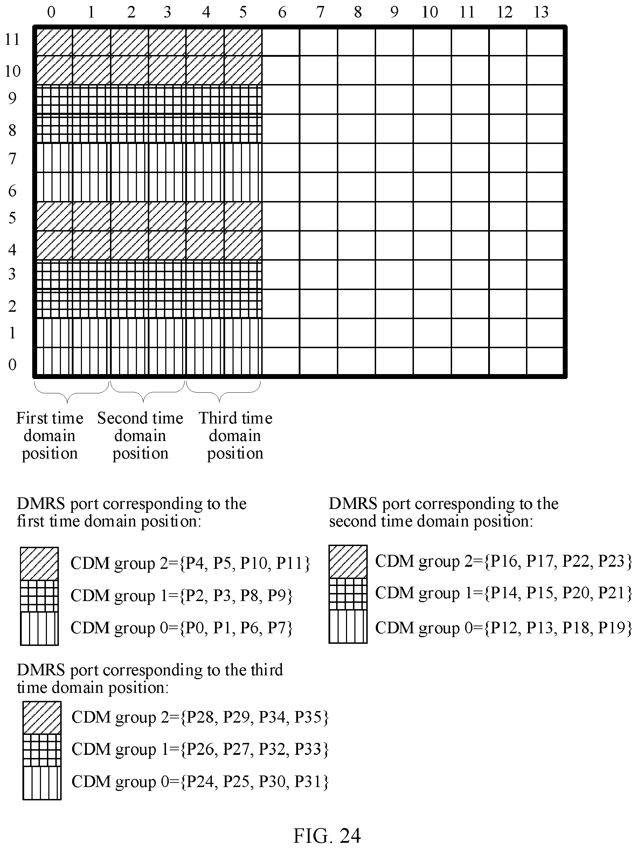

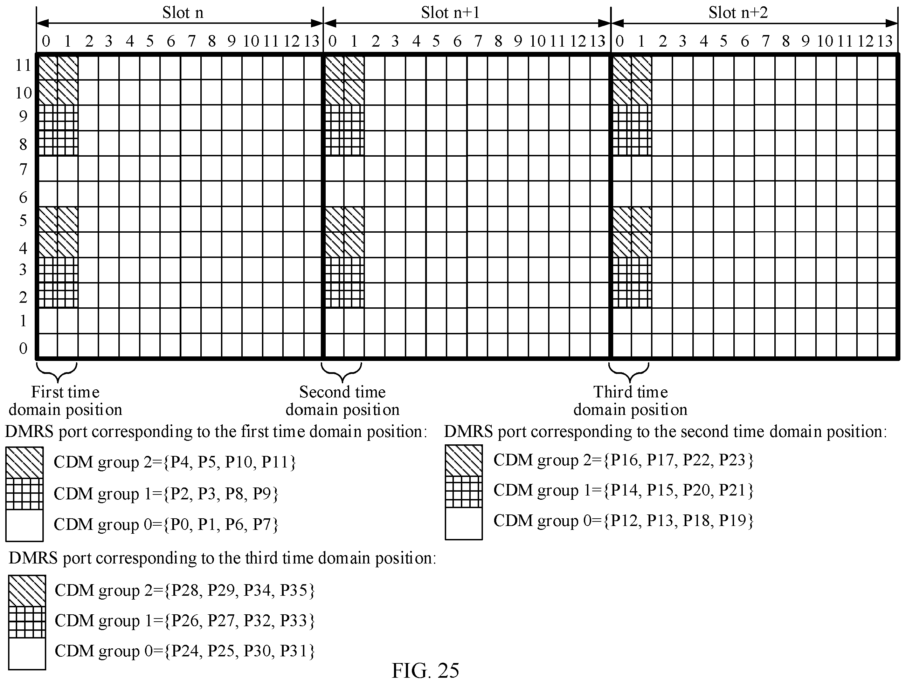

To make a person skilled in the art better understand this application, that the scheduling time unit is a slot is used as an example. FIG. 24 and FIG. 25 show several examples in which DMRS ports included in any two of a first DMRS port set, a second DMRS port set, and a third DMRS port set are completely different. The first DMRS port set includes DMRS ports 0 to 11, the second DMRS port set includes DMRS ports 12 to 23, and the third DMRS port set includes DMRS ports 23 to 35.

DMRS patterns shown in FIG. 24 and FIG. 25 each support a maximum of 36 DMRS ports, that is, M=36. The 36 DMRS ports correspond to three CDM groups, and each CDM group supports 12 DMRS ports. In addition, each of three CDM groups corresponding to a first time domain position corresponds to eight REs, four of the eight REs are consecutive, the other four REs are nonconsecutive, and the four consecutive REs correspond to four ports. Each of three CDM groups corresponding to a second time domain position corresponds to eight REs, four of the eight REs are consecutive, the other four REs are nonconsecutive, and the four consecutive REs correspond to four ports. Each of three CDM groups corresponding to a third time domain position corresponds to eight REs, four of the eight REs are consecutive, the other four REs are nonconsecutive, and the four consecutive REs correspond to four ports. A CDM group 0 corresponding to the first time domain position in FIG. 24 is used as an example. Four REs whose frequency domain positions are subcarriers 0 and 1 and whose time domain positions are symbols 0 and 1 correspond to DMRS ports 0, 1, 6, and 7. Four REs whose frequency domain positions are subcarriers 6 and 7 and whose time domain positions are symbols 0 and 1 also correspond to the DMRS ports 0, 1, 6, and 7. DMRSs corresponding to the DMRS ports corresponding to the four REs whose frequency domain positions are subcarriers 6 and 7 and whose time domain positions are symbols 0 and 1 are actually repetitions of DMRSs corresponding to the DMRS ports corresponding to the four REs whose frequency domain positions are subcarriers 0 and 1 and whose time domain positions are symbols 0 and 1. In the DMRS pattern shown in FIG. 24, the first time domain position, the second time domain position, and the third time domain position are located in a same slot, and the three time domain positions are consecutive in time domain. In the DMRS pattern shown in FIG. 25, the first time domain position, the second time domain position, and the third time domain position are located in different slots, and slots corresponding to the three time domain positions are consecutive in time domain.

In a possible implementation, a predefined rule is satisfied between a configuration of the first DMRS port set, a configuration of the second DMRS port set, and/or a configuration of the third DMRS port set and the scheduling time unit, which may also be understood as that the predefined rule is satisfied between a configuration of the first time domain position, a configuration of the second time domain position, and/or a configuration of the third time domain position and the scheduling time unit. In other words, it may be determined, according to the predefined rule, whether the first time domain position is configured in the scheduling unit or the first DMRS port set can be mapped to the scheduling unit, whether the second time domain position is configured in the scheduling unit or the second DMRS port set can be mapped to the scheduling unit, and/or whether the third time domain position is configured in the scheduling unit or the third DMRS port set can be mapped to the scheduling unit.

For a situation in which this solution is applied to the case in which the first time domain position, the second time domain position, and the third time domain position are located in different scheduling time units and a situation in which this solution is applied to the case in which the first time domain position, the second time domain position, and the third time domain position are located in a same scheduling time unit, the following separately describes the predefined rule by using examples.

(1) This solution is applied to the case in which the first time domain position, the second time domain position, and the third time domain position correspond to different scheduling time units.

Example 1

The predefined rule may include one or more of the following: Only the first DMRS port set is configured in a scheduling time unit that satisfies mod(m, N)=1;

only the second DMRS port set is configured in a scheduling time unit that satisfies mod(m, N)=2; or only the third DMRS port set is configured in a scheduling time unit that satisfies mod(m, N)=3, where m is an $m^{th}$ scheduling time unit in a plurality of scheduling time units corresponding to a scheduled PUSCH, and N is a positive integer.

Further, N may be configured or predefined by a system. For a value of N, refer to the foregoing descriptions in the case in which R=2.

Example 2

The predefined rule may include one or more of the following: Only the first DMRS port set is configured in a scheduling time unit that satisfies mod(m, 3)=0;

only the second DMRS port set is configured in a scheduling time unit that satisfies mod(m, 3)=1; or only the third DMRS port set is configured in a scheduling time unit that satisfies mod(m, 3)=2, where m is an index of the scheduling time unit.

Example 3

The predefined rule may include one or more of the following: Only the first DMRS port set is configured in a scheduling time unit that satisfies mod(m, 3)=1;

only the second DMRS port set is configured in a scheduling time unit that satisfies mod(m, 3)=2; or only the third DMRS port set is configured in a scheduling time unit that satisfies mod(m, 3)=0, where m is an $m^{th}$ scheduling time unit in a scheduled PUSCH.

Example 4

The predefined rule may be: There is an interval of P scheduling time units between a scheduling time unit in which only the first DMRS port set is configured and a scheduling time unit in which only the second DMRS port set is configured, and there is an interval of Q scheduling time units between the scheduling time unit in which only the second DMRS port set is configured and a scheduling time unit in which only the third DMRS port set is configured, where both P and Q are positive integers, and P and Q may be equal or unequal.
Further, only the first DMRS port set may be configured in a scheduling time unit 0, namely, a scheduling time unit whose index is 0; or only the first DMRS port set may be configured in the first scheduling time unit in a plurality of scheduling time units corresponding to a scheduled PUSCH.
For example, only the first DMRS port set may be configured in a scheduling time unit n+2*k*(P+1), only the second DMRS port set may be configured in a scheduling time unit n+(2*k+1)*(P+1), and only the third DMRS port set may be configured in a scheduling time unit n+(2*k+2)*(P+1), where k=0, 1, 2, 3, 4, ..., n is an integer greater than or equal to 0, and n+2*k*(P+1) and n+(2*k+2)*(P+1) each are an index of the scheduling time unit.
(2) This solution is applied to the case in which the first time domain position, the second time domain position, and the third time domain position correspond to a same scheduling time unit.

Example 1

The predefined rule may be: The first DMRS port set, the second DMRS port set, and the third DMRS port set are configured in a scheduling time unit that satisfies mod(m, N)=1, where mod() indicates a modulo operation, m is an $m^{th}$ scheduling time unit in a plurality of scheduling time units corresponding to a scheduled PUSCH, and N is an integer greater than 1.
Further, N may be configured or predefined by a system. For a value of N, refer to the foregoing descriptions in the case in which R=2.

Example 2

The predefined rule may be: The first DMRS port set, the second DMRS port set, and the third DMRS port set are configured in a scheduling time unit that satisfies mod(m, 2)=0, where m is an index of the scheduling time unit.
In other words, the first DMRS port set, the second DMRS port set, and the third DMRS port set are configured in a scheduling time unit whose index is an even number, and the first DMRS port set, the second DMRS port set, and the third DMRS port set are not configured in a scheduling time unit whose index is an odd number.
Alternatively, the predefined rule may be: The first DMRS port set, the second DMRS port set, and the third DMRS port set are configured in a scheduling time unit that satisfies mod(m, 2)=1, where m is an index of the scheduling time unit.
In other words, the first DMRS port set, the second DMRS port set, and the third DMRS port set are configured in a scheduling time unit whose index is an odd number, and the first DMRS port set, the second DMRS port set, and the third DMRS port set are not configured in a scheduling time unit whose index is an even number.

Example 3

The predefined rule may be: The first DMRS port set, the second DMRS port set, and the third DMRS port set are configured in a scheduling time unit that satisfies mod(m, 2)=0, where m is an $m^{th}$ scheduling time unit in a plurality of scheduling time units corresponding to a scheduled PUSCH.
In other words, in the plurality of scheduling time units corresponding to the scheduled PUSCH, the first DMRS port set, the second DMRS port set, and the third DMRS port set are configured in an even-numbered scheduling time unit, and the first DMRS port set, the second DMRS port set, and the third DMRS port set are not configured in an odd-numbered scheduling time unit.
Alternatively, the predefined rule may be: The first DMRS port set, the second DMRS port set, and the third DMRS port set are configured in a scheduling time unit that satisfies mod(m, 2)=1, where m is an $m^{th}$ scheduling time unit in a plurality of scheduling time units corresponding to a scheduled PUSCH.
In other words, in the plurality of scheduling time units corresponding to the scheduled PUSCH, the first DMRS port set, the second DMRS port set, and the third DMRS port set are configured in an odd-numbered scheduling time unit, and the first DMRS port set, the second DMRS port set, and the third DMRS port set are not configured in an even-numbered scheduling time unit.

Example 4

The predefined rule may be: The first DMRS port set, the second DMRS port set, and the third DMRS port set are configured at an interval of P scheduling time units, where P is a positive integer.
In other words, there is an interval of P scheduling time units between two scheduling time units that are closest to each other in time domain and that are configured with the first DMRS port set, the second DMRS port set, and the third DMRS port set. For example, the first DMRS port set, the second DMRS port set, and the third DMRS port set are configured in a scheduling time unit n+k*(P+1), and the first DMRS port set, the second DMRS port set, and the third DMRS port set are not configured in another scheduling time unit, where k=0, 1, 2, 3, 4, ..., n is an integer greater than or equal to 0, and n+k*(P+1) is an index of the scheduling time unit.
For example, assuming that P=2 and n=0, the first DMRS port set, the second DMRS port set, and the third DMRS port set may be configured in scheduling time units 0, 3, 6, 9, ..., and the first DMRS port set and the second DMRS port set may not be configured in another scheduling time unit.
Alternatively, the predefined rule may be: In a plurality of scheduling time units corresponding to a scheduled PUSCH, the first DMRS port set, the second DMRS port set, and the third DMRS port set are configured at an interval of P scheduling time units, where P is a positive integer.
For example, in the plurality of scheduling time units corresponding to the scheduled PUSCH, the first DMRS port set, the second DMRS port set, and the third DMRS port set are configured in a $[1+k*(P+1)]^{th}$ scheduling time unit, and the first DMRS port set, the second DMRS port set, and the third DMRS port set are not configured in another scheduling time unit, where k=0, 1, 2, 3, 4, ..., n+k*(P+1)≤m, m is a quantity of scheduling time units corresponding to the scheduled PUSCH, and n is an integer greater than or equal to 0.
For example, assuming that P=2 and m=5, in five scheduling time units corresponding to the scheduled PUSCH, the first DMRS port set, the second DMRS port set, and the third DMRS port set may be configured in the first scheduling time unit and the fourth scheduling time unit, and the first DMRS port set, the second DMRS port set, and the third DMRS port set are not configured in another scheduling time unit.

It should be understood that the predefined rule in this application may alternatively be any other reasonable rule, and a specific rule of the predefined rule is not limited in this application.

It should be noted that the first time domain position, the second time domain position, and the third time domain position in the DMRS patterns shown in FIG. 13 to FIG. 25 are merely examples. A symbol or symbols specifically occupied by the first time domain position, the second time domain position, and the third time domain position are not limited in this application. For example, in some DMRS patterns, the first time domain position corresponds to symbols 0 and 1. However, during actual implementation, the first time domain position may correspond to symbols 1 and 2. In addition, a correspondence between a CDM group and a DMRS port in each of the DMRS patterns shown in FIG. 13 to FIG. 25 is merely an example. During actual implementation, the correspondence between a CDM group and a DMRS port may not be shown in the figure, or a quantity of CDM groups may not be 3. For example, in FIG. 13 to FIG. 23, a maximum of three CDM groups are supported. However, during actual implementation, the first time domain position may correspond to three CDM groups, and the second time domain position may correspond to three other CDM groups, for example, CDM groups 3 to 5. For another example, for the DMRS pattern shown in FIG. 13, during actual implementation, a CDM group 0 may correspond to a DMRS port corresponding to a CDM group 2 in FIG. 13, and the CDM group 2 may correspond to a DMRS port corresponding to the CDM group 0 in FIG. 13.

It should be understood that the DMRS pattern is not limited in this application. The DMRS patterns shown in FIG. 13 to FIG. 25 are merely examples, and should not constitute any limitation on this application.

In conclusion, in this solution provided in this application, different DMRS port sets are respectively mapped to at least two time domain positions, to support more than 12 orthogonal DMRS ports, for example, 24, 36, 48, or even more orthogonal DMRS ports. In this way, more spatial layers can be used for parallel transmission and a system capacity can be improved.

In an embodiment of this application, the first time domain position and the second time domain position may be configured for each slot, the first time domain position may be used to send a front-loaded DMRS, and the second time domain position may be used to send an additional DMRS. In this case, the terminal device provided in this application may be compatible with a legacy terminal device in some scenarios, and cannot be compatible with the legacy terminal device in some other scenarios. The following provides descriptions.

The legacy terminal device refers to a terminal device (namely, an existing terminal device, for example, a terminal device in a 4G system or a terminal device in a current 5G system) supported by a current standard or a previous standard. Therefore, the legacy terminal device can identify DMRS ports 0 to 11 only on a front-loaded DMRS symbol and an additional DMRS symbol. That the legacy terminal device is compatible means that during multi-user pairing, the legacy terminal device and a new terminal device may be scheduled on a same time-frequency resource for transmission.

1. The legacy terminal device is compatible.

An additional DMRS of the legacy terminal device is a repetition of a front-loaded DMRS. In other words, the legacy terminal device sends, on the additional DMRS symbol, a DMRS that is the same as that on the front-loaded DMRS symbol.

In this solution provided in this application, when an orthogonal DMRS port is added, the existing terminal device can be further compatible. In this way, the terminal device provided in this application and a terminal device that supports only an existing standard capability can perform multi-user pairing, and no hardware or software update needs to be performed on the existing terminal device.

2. The legacy terminal device is not compatible.

The legacy terminal device does not send a DMRS on the additional DMRS symbol.

In this scenario, the terminal device provided in this application and a terminal device that supports only an existing standard capability cannot perform multi-user pairing.

In this application, before S220, to be specific, before sending the DMRS, the terminal device may determine a CDM group and OCC that correspond to a DMRS port, and may generate a corresponding DMRS sequence.

In a possible implementation, a correspondence between a DMRS port, a CDM group, and OCC is shown in a part or all of Table 2.

**Table 2**

| $\tilde{p}$ | CDM group $\lambda$ | Δ | $w_f(k'+2t)$ $k'=0$ $t=0$ | $k'=1$ $t=0$ | $k'=0$ $t=1$ | $k'=1$ $t=1$ | $w_t(l')$ $l'=0$ | $l'=1$ | DMRS extend Flag |
|---|---|---|---|---|---|---|---|---|---|
| 0 | 0 | 0 | +1 | +1 | +1 | +1 | +1 | +1 | 0 |
| 1 | 0 | 0 | +1 | -1 | +1 | -1 | +1 | +1 | 0 |
| 2 | 1 | 2 | +1 | +1 | +1 | +1 | +1 | +1 | 0 |
| 3 | 1 | 2 | +1 | -1 | +1 | -1 | +1 | +1 | 0 |
| 4 | 2 | 4 | +1 | +1 | +1 | +1 | +1 | +1 | 0 |
| 5 | 2 | 4 | +1 | -1 | +1 | -1 | +1 | +1 | 0 |
| 6 | 0 | 0 | +1 | +1 | +1 | +1 | +1 | -1 | 0 |
| 7 | 0 | 0 | +1 | -1 | +1 | -1 | +1 | -1 | 0 |
| 8 | 1 | 2 | +1 | +1 | +1 | +1 | +1 | -1 | 0 |
| 9 | 1 | 2 | +1 | -1 | +1 | -1 | +1 | -1 | 0 |
| 10 | 2 | 4 | +1 | +1 | +1 | +1 | +1 | -1 | 0 |
| 11 | 2 | 4 | +1 | -1 | +1 | -1 | +1 | -1 | 0 |
| 12 | 0 | 0 | +1 | +1 | -1 | -1 | +1 | +1 | 0 |
| 13 | 0 | 0 | +1 | -1 | -1 | 1 | +1 | +1 | 0 |
| 14 | 1 | 2 | +1 | +1 | -1 | -1 | +1 | +1 | 0 |
| 15 | 1 | 2 | +1 | -1 | -1 | 1 | +1 | +1 | 0 |
| 16 | 2 | 4 | +1 | +1 | -1 | -1 | +1 | +1 | 0 |
| 17 | 2 | 4 | +1 | -1 | -1 | 1 | +1 | +1 | 0 |
| 18 | 0 | 0 | +1 | +1 | -1 | -1 | +1 | -1 | 0 |
| 19 | 0 | 0 | +1 | -1 | -1 | 1 | +1 | -1 | 0 |
| 20 | 1 | 2 | +1 | +1 | -1 | -1 | +1 | -1 | 0 |
| 21 | 1 | 2 | +1 | -1 | -1 | 1 | +1 | -1 | 0 |
| 22 | 2 | 4 | +1 | +1 | -1 | -1 | +1 | -1 | 0 |
| 23 | 2 | 4 | +1 | -1 | -1 | 1 | +1 | -1 | 0 |
| 24 | 0 | 0 | +1 | +1 | -1 | -1 | +1 | +1 | 1 |
| 25 | 0 | 0 | +1 | -1 | -1 | 1 | +1 | +1 | 1 |
| 26 | 1 | 2 | +1 | +1 | -1 | -1 | +1 | +1 | 1 |
| 27 | 1 | 2 | +1 | -1 | -1 | 1 | +1 | +1 | 1 |
| 28 | 2 | 4 | +1 | +1 | -1 | -1 | +1 | +1 | 1 |
| 29 | 2 | 4 | +1 | -1 | -1 | 1 | +1 | +1 | 1 |
| 30 | 0 | 0 | +1 | +1 | -1 | -1 | +1 | -1 | 1 |
| 31 | 0 | 0 | +1 | -1 | -1 | 1 | +1 | -1 | 1 |
| 32 | 1 | 2 | +1 | +1 | -1 | -1 | +1 | -1 | 1 |
| 33 | 1 | 2 | +1 | -1 | -1 | 1 | +1 | -1 | 1 |
| 34 | 2 | 4 | +1 | +1 | -1 | -1 | +1 | -1 | 1 |
| 35 | 2 | 4 | +1 | -1 | -1 | 1 | +1 | -1 | 1 |

In Table 2, $\tilde{p}$ indicates an index of the DMRS port, $\lambda$ indicates an index of the CDM group, $\Delta$ indicates a subcarrier offset, $w_f(k' + 2t)$ indicates frequency domain OCC, and $w_t(l')$ indicates the frequency domain OCC.

The last column in Table 2 may not be included. In Table 2, when the DMRS extension identifier (DMRSextendFlag) is 0, it indicates that the identifier is invalid. When DMRSextendFlag is 1, it indicates that the DMRS port is mapped to the second time domain position (for example, the additional DMRS symbol). It should be understood that the DMRS extension identifier may alternatively be replaced with another identifier having a same function.

In a possible implementation, a DMRS initial sequence r(n) generated based on a gold sequence may satisfy the following formula:

$$r(n) = \frac{1}{\sqrt{2}}\left(1 - 2 \cdot c(2n)\right) + j\frac{1}{\sqrt{2}}\left(1 - 2 \cdot c(2n+1)\right) \quad (1),$$

where

$c(i)$ is a pseudo-random sequence, and a generation formula is:

$$c(n) = \left(x_1(n + N_C) + x_2(n + N_C)\right)\mathrm{mod}\,2$$
$$x_1(n + 31) = \left(x_1(n + 3) + x_1(n)\right)\mathrm{mod}\,2 \qquad (2),$$
$$x_2(n + 31) = \left(x_2(n + 3) + x_2(n + 2) + x_2(n + 1) + x_2(n)\right)\mathrm{mod}\,2$$

where

$N_C$ = 1600, $x_1(n)$ may be initialized as $x_1(0) = 1, x_1(n) = 0, n = 1, 2, ..., 30$, and $x_2(n)$ satisfies: $c_{\mathrm{init}} = \sum_{i=0}^{30} x_2(i) \cdot 2^i$ . $c_{\mathrm{init}}$ is defined as:

$$c_{\mathrm{init}} = \left(2^{17}\left(N_{\mathrm{symb}}^{\mathrm{slot}} n_{\mathrm{s,f}}^{\mu} + l + 1\right)\left(2N_{\mathrm{ID}}^{n_{\mathrm{SCID}}} + 1\right) + 2N_{\mathrm{ID}}^{n_{\mathrm{SCID}}} + n_{\mathrm{SCID}}\right)\mathrm{mod}\,2^{31} \quad (3),$$

where

$l$ is a symbol index, $n_{\mathrm{s,f}}^{\mu}$ is a quantity of slots in a frame, $N_{\mathrm{symb}}^{\mathrm{slot}}$ is a quantity of symbols in a slot, $n_{\mathrm{SCID}} \in \{0,1\}$ and is a DMRS sequence initialization parameter, and $N_{\mathrm{ID}}^{n_{\mathrm{SCID}}}$ is cover code. Values of $N_{\mathrm{ID}}^{n_{\mathrm{SCID}}}$ depend on different upper-layer parameter configurations.

When the sequence r(n) is mapped to each RE, the following formula is satisfied:

$$\tilde{a}_{k,l}^{(\tilde{p}_j,\mu)} = w_f(k' + 2t)w_t(l')r(2n + k')$$
$$k = 6n + k' + \Delta \qquad \text{Configuration type 2}$$
$$k' = 0, 1$$
$$t = \mathrm{mod}(n, 2) \qquad\qquad (4),$$

where

$l = \bar{l} + l'$

$n = 0, 1, ...$

$j$ = 0,1,..., $v$-1

k is a subcarrier index, $l$ is a symbol index, $\tilde{P}_j$ is an index of the DMRS port, and mod() is a modulo operation. A meaning of $\Delta$ is the same as that described above, $\bar{l}$ is a symbol offset, and $\mu$ is an index of a subcarrier spacing. Meanings of $w_f(k' + 2t)$ and $w_t(l')$ are the same as those described above, and v is a layer index and is a preset value.

In an embodiment of this application, the sequence $r(n)$ may be mapped to each RE according to the foregoing formula (4).

Further, as described above, the network device may indicate the scheduled DMRS port to the terminal device by using the indication information. For example, the indication information may be an index value, the index value corresponds to one or more DMRS ports, and the one or more DMRS ports are scheduled DMRS ports.

In a possible implementation, when the first time domain position and the second time domain position are located in a same scheduling time unit, a correspondence between an index value (the indication information) and a DMRS port may be shown in a part or all of one or more of Table 3 to Table 6.

When a rank (rank) is 1, the correspondence between an index value (the indication information) and a DMRS port is shown in Table 3. It should be understood that for uplink transmission, when a rank (rank) configured by the network device for uplink transmission of the terminal device is 1, the terminal device requires only one DMRS port when sending uplink data, in other words, a quantity of DMRS ports scheduled by the network device is 1.

**Table 3**

| Index value (value) | Quantity of DMRS CDM groups without data | Index of the DMRS port | Quantity of front-loaded DMRS symbols | Quantity of additional DMRS symbols |
|---|---|---|---|---|
| 0 | 1 | 0 | 1 | N/A |
| 1 | 1 | 1 | 1 | N/A |
| 2 | 2 | 0 | 1 | N/A |
| 3 | 2 | 1 | 1 | N/A |
| 4 | 2 | 2 | 1 | N/A |
| 5 | 2 | 3 | 1 | N/A |
| 6 | 3 | 0 | 1 | N/A |
| 7 | 3 | 1 | 1 | N/A |
| 8 | 3 | 2 | 1 | N/A |
| 9 | 3 | 3 | 1 | N/A |
| 10 | 3 | 4 | 1 | N/A |
| 11 | 3 | 5 | 1 | N/A |
| 12 | 3 | 0 | 2 | N/A |
| 13 | 3 | 1 | 2 | N/A |
| 14 | 3 | 2 | 2 | N/A |
| 15 | 3 | 3 | 2 | N/A |
| 16 | 3 | 4 | 2 | N/A |
| 17 | 3 | 5 | 2 | N/A |
| 18 | 3 | 6 | 2 | N/A |
| 19 | 3 | 7 | 2 | N/A |
| 20 | 3 | 8 | 2 | N/A |
| 21 | 3 | 9 | 2 | N/A |
| 22 | 3 | 10 | 2 | N/A |
| 23 | 3 | 11 | 2 | N/A |
| 24 | 1 | 0 | 2 | N/A |

(continued)

| Index value (value) | Quantity of DMRS CDM groups without data | Index of the DMRS port | Quantity of front-loaded DMRS symbols | Quantity of additional DMRS symbols |
|---|---|---|---|---|
| 25 | 1 | 1 | 2 | N/A |
| 26 | 1 | 6 | 2 | N/A |
| 27 | 1 | 7 | 2 | N/A |
| 28 | 3 | 12 | 2 | N/A |
| 29 | 3 | 13 | 2 | N/A |
| 30 | 3 | 14 | 2 | N/A |
| 31 | 3 | 15 | 2 | N/A |
| 32 | 3 | 16 | 2 | N/A |
| 33 | 3 | 17 | 2 | N/A |
| 34 | 3 | 18 | 2 | N/A |
| 35 | 3 | 19 | 2 | N/A |
| 36 | 3 | 20 | 2 | N/A |
| 37 | 3 | 21 | 2 | N/A |
| 38 | 3 | 22 | 2 | N/A |
| 39 | 3 | 23 | 2 | N/A |
| 40 | 3 | 24 | 0 | 2 |
| 41 | 3 | 25 | 0 | 2 |
| 42 | 3 | 26 | 0 | 2 |
| 43 | 3 | 27 | 0 | 2 |
| 44 | 3 | 28 | 0 | 2 |
| 45 | 3 | 29 | 0 | 2 |
| 46 | 3 | 30 | 0 | 2 |
| 47 | 3 | 31 | 0 | 2 |
| 48 | 3 | 32 | 0 | 2 |
| 49 | 3 | 33 | 0 | 2 |
| 50 | 3 | 34 | 0 | 2 |
| 51 | 3 | 35 | 0 | 2 |
| 52 to 63 | Reserved (Reserved) | Reserved | Reserved | Reserved |

It should be understood that "N/A" in this specification indicates that a corresponding quantity of symbols is 0.

In Table 3, the index values 0 to 27 are the same as those in Table 7.3.1.1.2-20 in TS 38.212 in the conventional technology. The index values 28 to 51 are provided in this embodiment of this application. For example, when the indication information sent by the network device is 30, it indicates that the scheduled DMRS port is a DMRS port whose index is 14, and a quantity of symbols occupied by a CDM group in which the DMRS port is located is 2.

In addition, in Table 3, when the index values 40 to 51 respectively correspond to the DMRS ports 24 to 35, a quantity of corresponding additional DMRS symbols is 2, and a quantity of front-loaded DMRS symbols is 0, it indicates that neither the DMRS nor a PUSCH is sent in a position corresponding to the front-loaded DMRS symbol. When an index value of the scheduled DMRS port that is indicated by the network device to the terminal device is within a range from 24 to 35, even if the front-loaded DMRS symbol is configured, the terminal device does not send any signal on the symbol. In Table 3, a quantity of front-loaded DMRS symbols is not related to the DMRS ports 0 to 23.

Optionally, the last column in Table 3 may alternatively not be included. In this case, for the DMRS ports 24 to 35, two additional DMRS symbols are configured by default.

When a rank (rank) is 2, the correspondence between an index value and a DMRS port is shown in Table 4. It should be understood that for uplink transmission, when a rank (rank) configured by the network device for uplink transmission of the terminal device is 2, the terminal device requires two DMRS ports when sending uplink data, in other words, a quantity of DMRS ports scheduled by the network device is 2.

**Table 4**

| Index value (value) | Quantity of DMRS CDM groups without data | Index of the DMRS port | Quantity of front-loaded DMRS symbols | Quantity of additional DMRS symbols |
|---|---|---|---|---|
| 0 | 1 | 0 and 1 | 1 | N/A |
| 1 | 2 | 0 and 1 | 1 | N/A |
| 2 | 2 | 2 and 3 | 1 | N/A |
| 3 | 3 | 0 and 1 | 1 | N/A |
| 4 | 3 | 2 and 3 | 1 | N/A |
| 5 | 3 | 4 and 5 | 1 | N/A |
| 6 | 2 | 0 and 2 | 1 | N/A |
| 7 | 3 | 0 and 1 | 2 | N/A |
| 8 | 3 | 2 and 3 | 2 | N/A |
| 9 | 3 | 4 and 5 | 2 | N/A |
| 10 | 3 | 6 and 7 | 2 | N/A |
| 11 | 3 | 8 and 9 | 2 | N/A |
| 12 | 3 | 10 and 11 | 2 | N/A |
| 13 | 1 | 0 and 1 | 2 | N/A |
| 14 | 1 | 6 and 7 | 2 | N/A |
| 15 | 2 | 0 and 1 | 2 | N/A |
| 16 | 2 | 2 and 3 | 2 | N/A |
| 17 | 2 | 6 and 7 | 2 | N/A |
| 18 | 2 | 8 and 9 | 2 | N/A |
| 19 | 3 | 12 and 13 | 2 | N/A |
| 20 | 3 | 14 and 15 | 2 | N/A |
| 21 | 3 | 16 and 17 | 2 | N/A |
| 22 | 3 | 18 and 29 | 2 | N/A |
| 23 | 3 | 20 and 21 | 2 | N/A |
| 24 | 3 | 22 and 23 | 2 | N/A |
| 25 | 3 | 24 and 25 | 0 | 2 |
| 26 | 3 | 26 and 27 | 0 | 2 |
| 27 | 3 | 28 and 29 | 0 | 2 |
| 28 | 3 | 30 and 31 | 0 | 2 |
| 29 | 3 | 32 and 33 | 0 | 2 |
| 30 | 3 | 34 and 35 | 0 | 2 |
| 31 | Reserved | Reserved | Reserved | Reserved |

In Table 4, the index values 0 to 18 are the same as those in Table 7.3.1.1.2-21 in TS 38.212 in the conventional technology. The index values 19 to 30 are provided in this embodiment of this application. For example, when the indication information sent by the network device is 24, it indicates that the scheduled DMRS ports are DMRS ports whose indexes are 22 and 23.

Optionally, the last column in Table 4 may alternatively not be included. In this case, for the DMRS ports 24 to 35, two additional DMRS symbols are configured by default.

When a rank (rank) is 3, the correspondence between an index value and a DMRS port is shown in Table 5. It should be understood that for uplink transmission, when a rank (rank) configured by the network device for uplink transmission of the terminal device is 3, the terminal device requires three DMRS ports when sending uplink data, in other words, a quantity of DMRS ports scheduled by the network device is 3.

**Table 5**

| Index value (value) | Quantity of DMRS CDM groups without data | Index of the DMRS port | Quantity of front-loaded DMRS symbols | Quantity of additional DMRS symbols |
|---|---|---|---|---|
| 0 | 2 | 0 to 2 | 1 | N/A |
| 1 | 3 | 0 to 2 | 1 | N/A |
| 2 | 3 | 3 to 5 | 1 | N/A |
| 3 | 3 | 0, 1, and 6 | 2 | N/A |
| 4 | 3 | 2, 3, and 8 | 2 | N/A |
| 5 | 3 | 4, 5, and 10 | 2 | N/A |
| 6 | 3 | 12, 13, and 18 | 2 | N/A |
| 7 | 3 | 14, 15, and 20 | 2 | N/A |
| 8 | 3 | 16, 17, and 22 | 2 | N/A |
| 9 | 3 | 19, 21, and 23 | 2 | N/A |
| 10 | 3 | 24, 25, and 30 | 0 | 2 |
| 11 | 3 | 26, 27, and 32 | 0 | 2 |
| 12 | 3 | 28, 29, and 34 | 0 | 2 |
| 13 | 3 | 31, 33, and 35 | 0 | 2 |
| 14 to 31 | Reserved | Reserved | Reserved | Reserved |

In Table 5, the index values 0 to 5 are the same as those in Table 7.3.1.1.2-22 in TS 38.212 in the conventional technology. The index values 6 to 31 are provided in this embodiment of this application. For example, when the indication information sent by the network device is 9, it indicates that the scheduled DMRS ports are DMRS ports whose indexes are 19, 22, and 23.

Optionally, the last column in Table 5 may alternatively not be included. In this case, for the DMRS ports 24 to 35, two additional DMRS symbols are configured by default.

When a rank (rank) is 4, the correspondence between an index value and a DMRS port is shown in Table 6. It should be understood that for uplink transmission, when a rank (rank) configured by the network device for uplink transmission of the terminal device is 4, the terminal device requires four DMRS ports when sending uplink data, in other words, a quantity of DMRS ports scheduled by the network device is 4.

**Table 6**

| Index value (value) | Quantity of DMRS CDM groups without data | Index of the DMRS port | Quantity of front-loaded DMRS symbols | Quantity of additional DMRS symbols |
|---|---|---|---|---|
| 0 | 2 | 0 to 3 | 1 | N/A |
| 1 | 3 | 0 to 3 | 1 | N/A |
| 2 | 3 | 0, 1, 6, and 7 | 2 | N/A |
| 3 | 3 | 2, 3, 8, and 9 | 2 | N/A |

(continued)

| Index value (value) | Quantity of DMRS CDM groups without data | Index of the DMRS port | Quantity of front-loaded DMRS symbols | Quantity of additional DMRS symbols |
|---|---|---|---|---|
| 4 | 3 | 4, 5, 10, and 11 | 2 | N/A |
| 5 | 3 | 12, 13, 18, and 19 | 2 | N/A |
| 6 | 3 | 14, 15, 20, and 21 | 2 | N/A |
| 7 | 3 | 16, 17, 22, and 23 | 2 | N/A |
| 8 | 3 | 24, 25, 30, and 31 | 0 | 2 |
| 9 | 3 | 26, 27, 32, and 33 | 0 | 2 |
| 10 | 3 | 28, 29, 34, and 35 | 0 | 2 |
| 11 to 31 | Reserved | Reserved | Reserved | Reserved |

In Table 6, the index values 0 to 4 are the same as those in Table 7.3.1.1.2-23 in TS 38.212 in the conventional technology. The index values 5 to 10 are provided in this embodiment of this application. For example, when the indication information sent by the network device is 7, it indicates that the scheduled DMRS ports are DMRS ports whose indexes are 16, 17, 22, and 23.

Optionally, the last column in Table 6 may alternatively not be included. In this case, for the DMRS ports 24 to 35, two additional DMRS symbols are configured by default.

In a possible implementation, when the first time domain position and the second time domain position are located in different scheduling time units, a correspondence between an index value (the indication information) and a DMRS port may be shown in a part or all of one or more of Table 7 to Table 10.

When a rank (rank) is 1, the correspondence between an index value (the indication information) and a DMRS port is shown in Table 7.

**Table 7**

| Index value (value) | Quantity of DMRS CDM groups without data | Index of the DMRS port | Quantity of front-loaded DMRS symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |

(continued)

| Index value (value) | Quantity of DMRS CDM groups without data | Index of the DMRS port | Quantity of front-loaded DMRS symbols |
|---|---|---|---|
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28 | 3 | 12 | 2 |
| 29 | 3 | 13 | 2 |
| 30 | 3 | 14 | 2 |
| 31 | 3 | 15 | 2 |
| 32 | 3 | 16 | 2 |
| 33 | 3 | 17 | 2 |
| 34 | 3 | 18 | 2 |
| 35 | 3 | 19 | 2 |
| 36 | 3 | 20 | 2 |
| 37 | 3 | 21 | 2 |
| 38 | 3 | 22 | 2 |
| 39 | 3 | 23 | 2 |
| 40 | 3 | 24 | 2 |
| 41 | 3 | 25 | 2 |
| 42 | 3 | 26 | 2 |
| 43 | 3 | 27 | 2 |
| 44 | 3 | 28 | 2 |
| 45 | 3 | 29 | 2 |
| 46 | 3 | 30 | 2 |
| 47 | 3 | 31 | 2 |
| 48 | 3 | 32 | 2 |
| 49 | 3 | 33 | 2 |

(continued)

| Index value (value) | Quantity of DMRS CDM groups without data | Index of the DMRS port | Quantity of front-loaded DMRS symbols |
|---|---|---|---|
| 50 | 3 | 34 | 2 |
| 51 | 3 | 35 | 2 |
| 52 to 63 | Reserved (Reserved) | Reserved | Reserved |

When a rank (rank) is 2, the correspondence between an index value and a DMRS port is shown in Table 8.

**Table 8**

| Index value (value) | Quantity of DMRS CDM groups without data | Index of the DMRS port | Quantity of front-loaded DMRS symbols |
|---|---|---|---|
| 0 | 1 | 0 and 1 | 1 |
| 1 | 2 | 0 and 1 | 1 |
| 2 | 2 | 2 and 3 | 1 |
| 3 | 3 | 0 and 1 | 1 |
| 4 | 3 | 2 and 3 | 1 |
| 5 | 3 | 4 and 5 | 1 |
| 6 | 2 | 0 and 2 | 1 |
| 7 | 3 | 0 and 1 | 2 |
| 8 | 3 | 2 and 3 | 2 |
| 9 | 3 | 4 and 5 | 2 |
| 10 | 3 | 6 and 7 | 2 |
| 11 | 3 | 8 and 9 | 2 |
| 12 | 3 | 10 and 11 | 2 |
| 13 | 1 | 0 and 1 | 2 |
| 14 | 1 | 6 and 7 | 2 |
| 15 | 2 | 0 and 1 | 2 |
| 16 | 2 | 2 and 3 | 2 |
| 17 | 2 | 6 and 7 | 2 |
| 18 | 2 | 8 and 9 | 2 |
| 19 | 3 | 12 and 13 | 2 |
| 20 | 3 | 14 and 15 | 2 |
| 21 | 3 | 16 and 17 | 2 |
| 22 | 3 | 18 and 29 | 2 |
| 23 | 3 | 20 and 21 | 2 |
| 24 | 3 | 22 and 23 | 2 |
| 25 | 3 | 24 and 25 | 2 |
| 26 | 3 | 26 and 27 | 2 |
| 27 | 3 | 28 and 29 | 2 |
| 28 | 3 | 30 and 31 | 2 |

(continued)

| Index value (value) | Quantity of DMRS CDM groups without data | Index of the DMRS port | Quantity of front-loaded DMRS symbols |
|---|---|---|---|
| 29 | 3 | 32 and 33 | 2 |
| 30 | 3 | 34 and 35 | 2 |
| 31 | Reserved | Reserved | Reserved |

When a rank (rank) is 3, the correspondence between an index value and a DMRS port is shown in Table 9.

**Table 9**

| Index value (value) | Quantity of DMRS CDM groups without data | Index of the DMRS port | Quantity of front-loaded DMRS symbols |
|---|---|---|---|
| 0 | 2 | 0 to 2 | 1 |
| 1 | 3 | 0 to 2 | 1 |
| 2 | 3 | 3 to 5 | 1 |
| 3 | 3 | 0, 1, and 6 | 2 |
| 4 | 3 | 2, 3, and 8 | 2 |
| 5 | 3 | 4, 5, and 10 | 2 |
| 6 | 3 | 12, 13, and 18 | 2 |
| 7 | 3 | 14, 15, and 20 | 2 |
| 8 | 3 | 16, 17, and 22 | 2 |
| 9 | 3 | 19, 21, and 23 | 2 |
| 10 | 3 | 24, 25, and 30 | 2 |
| 11 | 3 | 26, 27, and 32 | 2 |
| 12 | 3 | 28, 29, and 34 | 2 |
| 13 | 3 | 31, 33, and 35 | 2 |
| 14 to 31 | Reserved | Reserved | Reserved |

When a rank (rank) is 4, the correspondence between an index value and a DMRS port is shown in Table 10.

**Table 10**

| Index value (value) | Quantity of DMRS CDM groups without data | Index of the DMRS port | Quantity of front-loaded DMRS symbols |
|---|---|---|---|
| 0 | 2 | 0 to 3 | 1 |
| 1 | 3 | 0 to 3 | 1 |
| 2 | 3 | 0, 1, 6, and 7 | 2 |
| 3 | 3 | 2, 3, 8, and 9 | 2 |
| 4 | 3 | 4, 5, 10, and 11 | 2 |
| 5 | 3 | 12, 13, 18, and 19 | 2 |
| 6 | 3 | 14, 15, 20, and 21 | 2 |
| 7 | 3 | 16, 17, 22, and 23 | 2 |
| 8 | 3 | 24, 25, 30, and 31 | 2 |
| 9 | 3 | 26, 27, 32, and 33 | 2 |

(continued)

| Index value (value) | Quantity of DMRS CDM groups without data | Index of the DMRS port | Quantity of front-loaded DMRS symbols |
|---|---|---|---|
| 10 | 3 | 28, 29, 34, and 35 | 2 |
| 11 to 31 | Reserved | Reserved | Reserved |

It should be understood that Table 2 to Table 10 are merely examples, and shall not constitute any limitation on this application.

The foregoing mainly describes a solution for sending a DMRS in uplink communication, and the following briefly describes a solution for sending a DMRS in downlink communication.

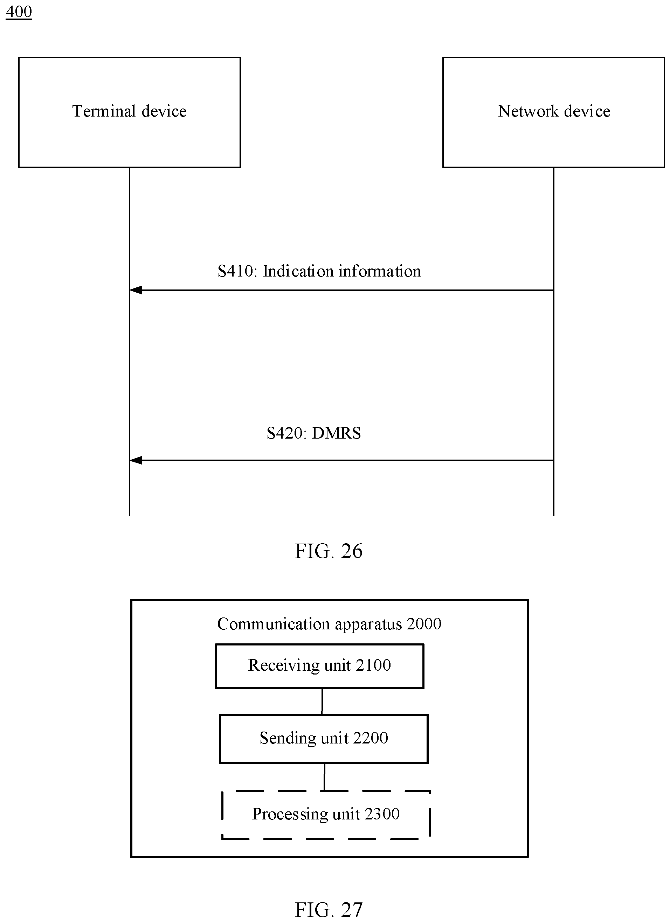

FIG. 26 is a schematic diagram of a DMRS sending method according to this application. The following briefly describes steps in the method 400.

S410: A network device sends indication information to a terminal device. Correspondingly, the terminal device receives the indication information from the network device.

The indication information indicates a scheduled DMRS port, or the indication information indicates a DMRS port configured by the network device. For example, the indication information may be sent by using DCI.

The scheduled DMRS port belongs to a DMRS port set, and the DMRS port set includes M DMRS ports. The M DMRS ports may be DMRS ports that can be supported by a system at most.

The M DMRS ports may correspond to R time domain positions, in other words, the M DMRS ports may be mapped to the R time domain positions, where R is an integer greater than or equal to 2. For example, the M DMRS ports may be mapped to two time domain positions or three time domain positions. Each time domain position occupies or corresponds to one or more consecutive symbols, and quantities of symbols occupied by any two time domain positions may be equal or unequal. Two adjacent time domain positions in the R time domain positions may be consecutive in time domain, or may be nonconsecutive in time domain. That the two time domain positions are adjacent herein means that there is no other time domain position, in the R time domain positions, between the two time domain positions.

In addition, each time domain position corresponds to one DMRS port set, in other words, R time domain positions correspond to R DMRS port sets, and any two of the R port sets are different.

For possible implementations of the R time domain positions and the corresponding R DMRS port sets, refer to the foregoing descriptions in the method 300. However, it should be understood that, when the possible implementations in the method 300 are applied to the method 400, the uplink-related content in the method 300 is correspondingly changed to downlink-related content. For example, the PUSCH in the method 300 is changed to a PDSCH.

S420: The network device sends a DMRS on the scheduled DMRS port. Correspondingly, the terminal device receives the DMRS from the network device on the scheduled DMRS port.

According to the DMRS transmission method provided in this application, different DMRS port sets (for example, a first DMRS port set and a second DMRS port set) are respectively mapped to at least two time domain positions (for example, a first time domain position and a second time domain position), so that more DMRS ports can be supported, thereby improving a system capacity.

It should be understood that the formulas (1) to (4) described in the method 300 and Tables 2 to 10 are also applicable to the method 400, and details are not described herein again.

FIG. 27 is a schematic diagram of a communication apparatus according to an embodiment of this application. As shown in FIG. 27, the communication apparatus 2000 may include a receiving unit 2100 and a sending unit 2200. Optionally, the communication apparatus may further include a processing unit 2200.

The receiving unit 2100 may be a receiver, an input interface, a pin, a circuit, or the like. The receiving unit 2100 may be configured to perform the receiving step in the foregoing method embodiment.

The sending unit 2200 may be a transmitter, an output interface, a pin, a circuit, or the like. The sending unit 2200 may be configured to perform the receiving step in the foregoing method embodiment.

It should be understood that the receiving unit 2100 and the sending unit 2200 may be jointly disposed as a transceiver unit. The transceiver unit may include the sending unit and/or the receiving unit. The transceiver unit may be a transceiver (including a transmitter and/or a receiver), an input/output interface (including an input interface and/or an output interface), a pin, a circuit, or the like.

The processing unit 2300 may be a processor (where the processing unit may include one or more processors), a processing circuit having a processor function, or the like, and may be configured to perform another step other than sending and receiving in the foregoing method embodiment.

Optionally, the communication apparatus may further include a storage unit. The storage unit may be a memory, an internal storage unit (for example a register or a cache), an external storage unit (for example, a read-only memory or a random access memory), or the like. The storage unit is configured to store instructions, and the processing unit 2300 executes the instructions stored in the storage unit, so that the communication apparatus performs the foregoing method.

In a possible design, the communication apparatus 2000 may correspond to the terminal device in the foregoing method embodiment, and may perform operations performed by the terminal device in the foregoing method.

In an example, the receiving unit 2100 is configured to receive indication information, where the indication information indicates a scheduled demodulation reference signal DMRS port. The sending unit 2200 is configured to send a DMRS on the scheduled DMRS port. The scheduled DMRS port belongs to a DMRS port set, the DMRS port set includes M DMRS ports, the M DMRS ports correspond to R time domain positions, R is an integer greater than or equal to 2, and any two of R DMRS port sets corresponding to the R time domain positions are different.

For example, the receiving unit 2100 is configured to receive indication information, where the indication information indicates a scheduled demodulation reference signal DMRS port. The sending unit 2200 is configured to send a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

For another example, the receiving unit 2100 is configured to receive indication information, where the indication information indicates a scheduled demodulation reference signal DMRS port. The sending unit 2200 is configured to send a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

In another example, the receiving unit 2100 is configured to receive indication information, where the indication information indicates a scheduled demodulation reference signal DMRS port. The sending unit 2200 is configured to receive a DMRS on the scheduled DMRS port. The scheduled DMRS port belongs to a DMRS port set, the DMRS port set includes M DMRS ports, the M DMRS ports correspond to R time domain positions, R is an integer greater than or equal to 2, and any two of R DMRS port sets corresponding to the R time domain positions are different.

For example, the receiving unit 2100 is configured to receive indication information, where the indication information indicates a scheduled demodulation reference signal DMRS port. The sending unit 2200 is configured to receive a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

For another example, the receiving unit 2100 is configured to receive indication information, where the indication information indicates a scheduled demodulation reference signal DMRS port. The sending unit 2200 is configured to receive a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

In another possible design, the communication apparatus 2000 may correspond to the network device in the foregoing method embodiment, and may perform operations performed by the network device in the foregoing method.

In an example, the sending unit 2200 is configured to send indication information, where the indication information indicates a scheduled demodulation reference signal DMRS port. The receiving unit 2100 is configured to receive a DMRS on the scheduled DMRS port. The scheduled DMRS port belongs to a DMRS port set, the DMRS port set includes M DMRS ports, the M DMRS ports correspond to R time domain positions, R is an integer greater than or equal to 2, and any two of R DMRS port sets corresponding to the R time domain positions are different.

For example, the receiving unit 2100 is configured to receive indication information, where the indication information indicates a scheduled demodulation reference signal DMRS port. The sending unit 2200 is configured to send a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

For another example, the receiving unit 2100 is configured to receive indication information, where the indication information indicates a scheduled demodulation reference signal DMRS port. The sending unit 2200 is configured to send a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

In another example, the receiving unit 2100 is configured to receive indication information, where the indication information indicates a scheduled demodulation reference signal DMRS port. The sending unit 2200 is configured to receive a DMRS on the scheduled DMRS port. The scheduled DMRS port belongs to a DMRS port set, the DMRS port set includes M DMRS ports, the M DMRS ports correspond to R time domain positions, R is an integer greater than or equal to 2, and any two of R DMRS port sets corresponding to the R time domain positions are different.

For example, the receiving unit 2100 is configured to receive indication information, where the indication information indicates a scheduled demodulation reference signal DMRS port. The sending unit 2200 is configured to receive a DMRS on the scheduled DMRS port. The scheduled DMRS port belongs to a DMRS port set, the DMRS port set includes M DMRS ports, the M DMRS ports correspond to a first time domain position and a second time domain position, and a first DMRS port set corresponding to the first time domain position is different from a second DMRS port set corresponding to the second time domain position.

For another example, the receiving unit 2100 is configured to receive indication information, where the indication information indicates a scheduled demodulation reference signal DMRS port. The sending unit 2200 is configured to receive a DMRS on the scheduled DMRS port. The scheduled DMRS port belongs to a DMRS port set, the DMRS port set includes M DMRS ports, the M DMRS ports correspond to a first time domain position, a second time domain position, and a third time domain position, and any two of a first DMRS port set corresponding to the first time domain position, a second DMRS port set corresponding to the second time domain position, and a third DMRS port set corresponding to the third time domain position are different.

It should be understood that for possible implementations of the R time domain positions and the R DMRS port sets, refer to descriptions in the foregoing method. For example, for implementations of the first time domain position, the second time domain position, the first DMRS port set, and the second DMRS port set, refer to the descriptions in the foregoing method when R=2. For another example, for implementations of the first time domain position, the second time domain position, the third time domain position, the first DMRS port set, the second DMRS port set, and the third DMRS port set, refer to the descriptions in the foregoing method when R=3. Details are not described herein again.

It should be understood that division of the foregoing units is merely function division, and there may be another division method during actual implementation.

It should be further understood that the foregoing processing unit may be implemented by using hardware, may be implemented by using software, or may be implemented by combining the software and the hardware.

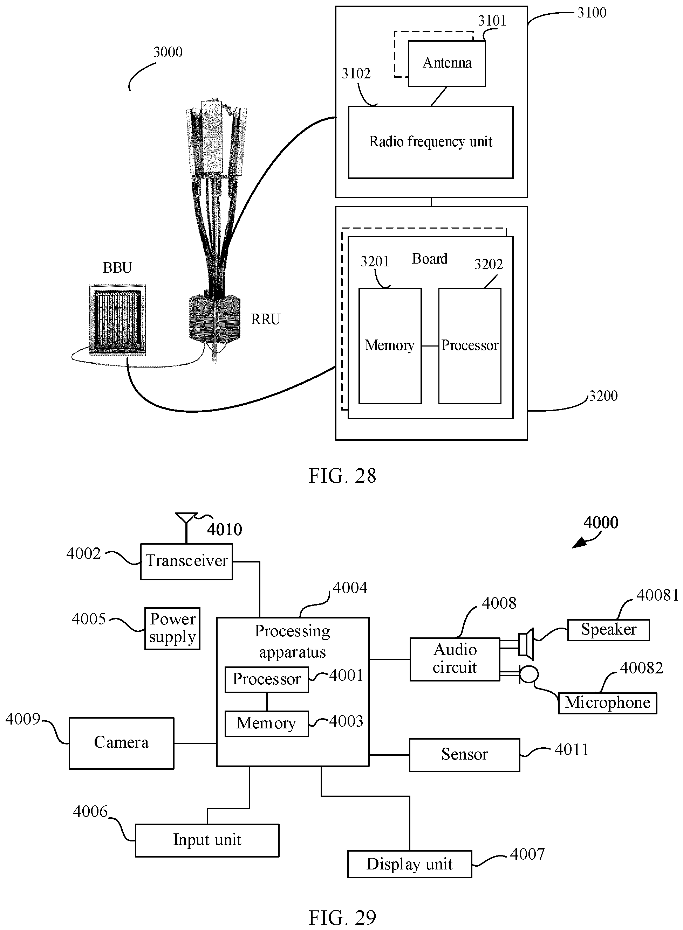

It should be further understood that, when the communication apparatus 2000 is a network device, the receiving unit 2100 and the sending unit 2200 in the communication apparatus may correspond to an RRU 3100 in a network device 2000 shown in FIG. 28, and the processing unit 2300 in the communication apparatus may correspond to a BBU 3200 in the network device 2000 shown in FIG. 28. When the communication apparatus 2000 is a chip configured in the network device, the transceiver unit 2100 in the communication apparatus may be an input/output interface.

It should be further understood that when the communication apparatus 2000 is a terminal device, the receiving unit 2100 and the sending unit 2200 in the communication apparatus 2000 may correspond to a transceiver 4002 in a terminal device 4000 shown in FIG. 29, and the processing unit 2300 in the communication apparatus 2000 may correspond to a processor 4001 in the terminal device 4000 shown in FIG. 29.

FIG. 28 is a schematic diagram of a structure of a network device according to an embodiment of this application, for example, may be a schematic diagram of a structure of a base station. The network device 3000 may perform a function of the network device in the foregoing method embodiment.

As shown in the figure, the network device 3000 may include one or more radio frequency units, for example, a remote radio unit (remote radio unit, RRU) 3100 and one or more baseband units (BBUs) (also referred to as distributed units (DUs)) 3200. The RRU 3100 may be referred to as a transceiver unit or a communication unit, and corresponds to the transceiver unit 2100 in FIG. 27.

Optionally, the transceiver unit 3100 may also be referred to as a transceiver machine, a transceiver circuit, a transceiver, or the like, and may include at least one antenna 3101 and a radio frequency unit 3102. Optionally, the transceiver unit 3100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 3100 is mainly configured to: receive and send a radio frequency signal and convert the radio frequency signal and a baseband signal. The BBU 3200 is mainly configured to: perform baseband processing, control the base station, and the like. The RRU 3100 and the BBU 3200 may be physically disposed together, or may be physically disposed separately, that is, the base station is a distributed base station.

The BBU 3200 is a control center of the base station, may also be referred to as a processing unit, and may correspond to the processing unit 2200 in FIG. 27. The BBU 3200 is mainly configured to implement a baseband processing function, for example, channel coding, multiplexing, modulation, and spreading. For example, the BBU (processing unit) may be configured to control the base station to perform an operation procedure related to the network device in the foregoing method embodiment.

In an example, the BBU 3200 may include one or more boards, and a plurality of boards may jointly support a radio access network (for example, an LTE network) having a single access standard, or may separately support radio access networks (for example, the LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action, for example, is configured to control the base station to perform the operation procedure related to the network device in the foregoing method embodiment. The memory 3201 and the processor 3202 may serve one or more boards. In other words, a memory and a processor may be separately disposed on each board. Alternatively, a plurality of boards may share a same memory and a same processor. In addition, a necessary circuit may further be disposed on each board.

It should be understood that the network device 3000 shown in FIG. 28 can implement processes related to the network device in the foregoing method embodiment. Operations or functions of the modules in the network device 3000 are separately used to implement corresponding procedures in the foregoing method embodiment. For details, refer to the descriptions in the foregoing method embodiment. To avoid repetition, detailed descriptions are appropriately omitted herein.

The BBU 3200 may be configured to perform an action that is described in the foregoing method embodiment and that is implemented inside the network device, and the RRU 3100 may be configured to perform an action that is described in the foregoing method embodiment and that is of sending and receiving by the network device. For details, refer to the descriptions in the foregoing method embodiment. Details are not described herein again.

FIG. 29 is a schematic diagram of a structure of a terminal device 4000 according to an embodiment of this application. As shown in the figure, the terminal device 4000 includes a processor 4001 and a transceiver 4002. Optionally, the terminal device 4000 may further include a memory 4003. The processor 4001, the transceiver 4002, and the memory 4003 may communicate with each other through an internal connection path, to transfer a control signal and/or a data signal. The memory 4003 is configured to store a computer program. The processor 4001 is configured to: invoke the computer program from the memory 4003 and run the computer program, to control the transceiver 4002 to send and receive a signal.

The processor 4001 and the memory 4003 may be combined into one processing apparatus 4004, and the processor 4001 is configured to execute the program code stored in the memory 4003 to implement the foregoing function. It should be understood that the processing apparatus 4004 shown in the figure is merely an example. During specific implementation, the memory 4003 may alternatively be integrated into the processor 4001, or may be independent of the processor 4001. This is not limited in this embodiment of this application.

The terminal device 4000 may further include an antenna 4010, configured to send, by using a radio signal, uplink data or uplink control signaling that is output by the transceiver 4002.

It should be understood that the terminal device 4000 shown in FIG. 29 can implement processes related to the terminal device in the foregoing method embodiment. Operations or functions of the modules in the terminal device 4000 are separately used to implement corresponding procedures in the foregoing method embodiment. For details, refer to the descriptions in the foregoing method embodiment. To avoid repetition, detailed descriptions are appropriately omitted herein.

Optionally, the terminal device 4000 may further include a power supply 4005 configured to supply power to various components or circuits in the terminal device.

In addition, to make functions of the terminal device more perfect, the terminal device 4000 may further include one or more of an input unit 4006, a display unit 4007, an audio circuit 4008, a camera 4009, a sensor 4011, and the like, and the audio circuit may further include a speaker 40081, a microphone 40082, and the like.

It should be understood that the processing apparatus 4004 or the processor 4001 may be a chip. For example, the processing apparatus 4004 or the processor 4001 may be a field programmable gate array (field programmable gate array, FPGA), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip. The general-purpose processor may be a microprocessor, or the processor may be any conventional processor or the like. The steps of the method disclosed with reference to embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

The memory (for example, the memory 4003) in this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the method provided in embodiments of this application, this application further provides a computer program product. The computer program product includes: computer program code, and when the computer program code is run on a computer, the computer is enabled to perform the method performed by the terminal device.

According to the method provided in embodiments of this application, this application further provides a computer program product. The computer program product includes: computer program code, and when the computer program code is run on a computer, the computer is enabled to perform the method performed by the network device.

According to the method provided in embodiments of this application, this application further provides a computer-readable medium. The computer-readable medium stores program code, and when the program code is run on a computer, the computer is enabled to perform the method performed by the terminal device.

According to the method provided in embodiments of this application, this application further provides a computer-readable medium. The computer-readable medium stores program code, and when the program code is run on a computer, the computer is enabled to perform the method performed by the network device.

According to the method provided in embodiments of this application, this application further provides a system, including a network device. Optionally, the system may further include a terminal device.

An embodiment of this application further provides a processing apparatus, including a processor and an interface. The processor is configured to perform the method in any one of the foregoing method embodiments.

It should be understood that the foregoing processing apparatus may be a chip. For example, the processing apparatus may be a field programmable gate array (field programmable gate array, FPGA), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip. The processing apparatus may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As shown in figures, both a computing device and an application that runs on a computing device may be components. One or more components may reside in a process or thread of execution, and the components may be located on one computer or distributed between two or more computers. In addition, these components may be executed from various computer-readable media that store various data structures. For example, the components may communicate by using a local or remote process and based on, for example, a signal having one or more data packets (for example, data from two components interacting with another component in a local system, a distributed system, or across a network such as the internet interacting with other systems by using the signal).

It should be understood that the "embodiment" mentioned throughout the specification means that a specific feature, structure, or characteristic related to the embodiment is included in at least one embodiment of this application. Therefore, embodiments in the entire specification may not necessarily refer to a same embodiment. In addition, the particular features, structures, or characteristics may be combined in one or more embodiments in any suitable manner.

It should be understood that, in embodiments of this application, numbers such as "first" and "second" are merely used to distinguish between different objects, for example, to distinguish between different network devices, and constitute no limitation on the scope of embodiments of this application. Embodiments of this application are not limited thereto.

It should be further understood that in this application, "when", "if", and "if" all refer to that the network element performs corresponding processing in an objective case, and are not intended to limit time. In addition, the network element is not required to perform a determining action during implementation, and it does not mean that there is another limitation.

It should be further understood that, in this application, "at least one" refers to one or more, and "a plurality of" refers to two or more.

It should be further understood that, in embodiments of this application, "B corresponding to A" indicates that B is associated with A, and B may be determined based on A. However, it should further be understood that determining B based on A does not mean that B is determined only based on A, and B may also be determined based on A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Unless otherwise specified, meanings of "an item includes one or more of the following: A, B, and C" in this application usually mean that the item may be any of the following: A; B; C; A and B; A and C; B and C; A, B, and C; A and A; A, A, and A; A, A, and B; A, A, and C or A, B and B; A, C, and C; B and B, B, B, and B, B, B, and C, or C and C; C, C, and C; and another combination of A, B and C. The foregoing uses three elements A, B, and C as an example to illustrate the optional items of the project. When there is an expression of "the item includes at least one of A, B, ..., and X", it indicates that when there are more elements in the expression, entries to which the item can be applied can also be obtained according to the foregoing rules.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A demodulation reference signal DMRS sending method, comprising:

   receiving indication information, wherein the indication information indicates a scheduled DMRS port, wherein the scheduled DMRS port belongs to a DMRS port set, the DMRS port set comprises M DMRS ports, the M DMRS ports correspond to a first time domain position and a second time domain position, and a first DMRS port set corresponding to the first time domain position is different from a second DMRS port set corresponding to the second time domain position; and
   sending a DMRS on the scheduled DMRS port.

2. The method according to claim 1, wherein DMRS ports comprised in the first DMRS port set and the second DMRS port set are partially the same and partially different; or
   DMRS ports comprised in the first DMRS port set and the second DMRS port set are completely different.

3. The method according to claim 1 or 2, wherein the first time domain position and the second time domain position are located in a same slot or different slots.

4. The method according to claim 3, wherein the first time domain position and the second time domain position are located in the same slot; and
   the first time domain position is used to send a front-loaded front-loaded DMRS, and/or the second time domain position is used to send an additional additional DMRS.

5. The method according to claim 3, wherein the first time domain position and the second time domain position are located in the different slots, and the first time domain position and the second time domain position each are used to send a front-loaded front-loaded DMRS.

6. The method according to any one of claims 3 to 5, wherein a predefined rule is satisfied between a configuration of the first DMRS port set and/or a configuration of the second DMRS port set and a slot.

7. The method according to claim 6, wherein
   the predefined rule comprises:

   only the first DMRS port set is configured in a slot that satisfies mod(m, 2)=1, and/or only the second DMRS port set is configured in a slot that satisfies mod(m, 2)=0, wherein

m is an $m^{th}$ slot in a plurality of slots corresponding to a scheduled uplink physical shared channel PUSCH; or only the first DMRS port set is configured in a slot that satisfies mod(m, 2)=0, and/or only the second DMRS port set is configured in a slot that satisfies mod(m, 2)=1, wherein m is an index of the slot.

8. The method according to any one of claims 1 to 7, wherein the first DMRS port set comprises DMRS ports whose indexes are 0 to 23; and

the second DMRS port set comprises DMRS ports whose indexes are 0 to 11 and 24 to 35;
the second DMRS port set comprises DMRS ports whose indexes are 24 to 35; or
the second DMRS port set comprises DMRS ports whose indexes are 24 to 47.

9. The method according to any one of claims 1 to 8, wherein the first time domain position and the second time domain position each correspond to two symbols.

10. A demodulation reference signal DMRS receiving method, comprising:

sending indication information, wherein the indication information indicates a scheduled DMRS port, wherein the scheduled DMRS port belongs to a DMRS port set, the DMRS port set comprises M DMRS ports, the M DMRS ports correspond to a first time domain position and a second time domain position, and a first DMRS port set corresponding to the first time domain position is different from a second DMRS port set corresponding to the second time domain position; and
receiving a DMRS on the scheduled DMRS port.

11. The method according to claim 10, wherein DMRS ports comprised in the first DMRS port set and the second DMRS port set are partially the same and partially different; or
DMRS ports comprised in the first DMRS port set and the second DMRS port set are completely different.

12. The method according to claim 10 or 11, wherein the first time domain position and the second time domain position are located in a same slot or different slots.

13. The method according to claim 12, wherein the first time domain position and the second time domain position are located in the same slot; and
the first time domain position is used to send a front-loaded front-loaded DMRS, and/or the second time domain position is used to send an additional additional DMRS.

14. The method according to claim 12, wherein the first time domain position and the second time domain position are located in the different slots, and the first time domain position and the second time domain position each are used to send a front-loaded front-loaded DMRS.

15. The method according to any one of claims 12 to 14, wherein a predefined rule is satisfied between a configuration of the first DMRS port set and/or a configuration of the second DMRS port set and a slot.

16. The method according to claim 15, wherein the predefined rule comprises:

only the first DMRS port set is configured in a slot that satisfies mod(m, 2)=1, and/or only the second DMRS port set is configured in a slot that satisfies mod(m, 2)=0, wherein m is an $m^{th}$ slot in a plurality of slots corresponding to a scheduled uplink physical shared channel PUSCH; or only the first DMRS port set is configured in a slot that satisfies mod(m, 2)=0, and/or only the second DMRS port set is configured in a slot that satisfies mod(m, 2)=1, wherein m is an index of the slot.

17. The method according to any one of claims 10 to 16, wherein the first DMRS port set comprises DMRS ports whose indexes are 0 to 23; and

the second DMRS port set comprises DMRS ports whose indexes are 0 to 11 and 24 to 35;
the second DMRS port set comprises DMRS ports whose indexes are 24 to 35; or

the second DMRS port set comprises DMRS ports whose indexes are 24 to 47.

18. The method according to any one of claims 10 to 17, wherein the first time domain position and the second time domain position each correspond to two symbols.

19. A communication apparatus, comprising:

a receiving unit, configured to receive indication information, wherein the indication information indicates a scheduled DMRS port, wherein
the scheduled DMRS port belongs to a DMRS port set, the DMRS port set comprises M DMRS ports, the M DMRS ports correspond to a first time domain position and a second time domain position, and a first DMRS port set corresponding to the first time domain position is different from a second DMRS port set corresponding to the second time domain position; and
a sending unit, configured to send a DMRS on the scheduled DMRS port.

20. The communication apparatus according to claim 19, wherein DMRS ports comprised in the first DMRS port set and the second DMRS port set are partially the same and partially different; or
DMRS ports comprised in the first DMRS port set and the second DMRS port set are completely different.

21. The communication apparatus according to claim 19 or 20, wherein the first time domain position and the second time domain position are located in a same slot or different slots.

22. The communication apparatus according to claim 21, wherein the first time domain position and the second time domain position are located in the same slot; and
the first time domain position is used to send a front-loaded front-loaded DMRS, and/or the second time domain position is used to send an additional additional DMRS.

23. The communication apparatus according to claim 21, wherein the first time domain position and the second time domain position are located in the different slots, and the first time domain position and the second time domain position each are used to send a front-loaded front-loaded DMRS.

24. The communication apparatus according to any one of claims 21 to 23, wherein a predefined rule is satisfied between a configuration of the first DMRS port set and/or a configuration of the second DMRS port set and a slot.

25. The communication apparatus according to claim 24, wherein
the predefined rule comprises:

only the first DMRS port set is configured in a slot that satisfies $mod(m, 2)=1$, and/or only the second DMRS port set is configured in a slot that satisfies $mod(m, 2)=0$, wherein
m is an $m^{th}$ slot in a plurality of slots corresponding to a scheduled uplink physical shared channel PUSCH; or
only the first DMRS port set is configured in a slot that satisfies $mod(m, 2)=0$, and/or only the second DMRS port set is configured in a slot that satisfies $mod(m, 2)=1$, wherein
m is an index of the slot.

26. The communication apparatus according to any one of claims 19 to 25, wherein the first DMRS port set comprises DMRS ports whose indexes are 0 to 23; and

the second DMRS port set comprises DMRS ports whose indexes are 0 to 11 and 24 to 35;
the second DMRS port set comprises DMRS ports whose indexes are 24 to 35; or
the second DMRS port set comprises DMRS ports whose indexes are 24 to 47.

27. The communication apparatus according to any one of claims 19 to 26, wherein the first time domain position and the second time domain position each correspond to two symbols.

28. A communication apparatus, comprising:

a sending unit, configured to send indication information, wherein the indication information indicates a scheduled DMRS port, wherein

the scheduled DMRS port belongs to a DMRS port set, the DMRS port set comprises M DMRS ports, the M DMRS ports correspond to a first time domain position and a second time domain position, and a first DMRS port set corresponding to the first time domain position is different from a second DMRS port set corresponding to the second time domain position; and
a receiving unit, configured to receive a DMRS on the scheduled DMRS port.

29. The communication apparatus according to claim 28, wherein DMRS ports comprised in the first DMRS port set and the second DMRS port set are partially the same and partially different; or
DMRS ports comprised in the first DMRS port set and the second DMRS port set are completely different.

30. The communication apparatus according to claim 28 or 29, wherein the first time domain position and the second time domain position are located in a same slot or different slots.

31. The communication apparatus according to claim 30, wherein the first time domain position and the second time domain position are located in the same slot; and
the first time domain position is used to send a front-loaded front-loaded DMRS, and/or the second time domain position is used to send an additional additional DMRS.

32. The communication apparatus according to claim 30, wherein the first time domain position and the second time domain position are located in the different slots, and the first time domain position and the second time domain position each are used to send a front-loaded front-loaded DMRS.

33. The communication apparatus according to any one of claims 30 to 32, wherein a predefined rule is satisfied between a configuration of the first DMRS port set and/or a configuration of the second DMRS port set and a slot.

34. The communication apparatus according to claim 33, wherein
the predefined rule comprises:

only the first DMRS port set is configured in a slot that satisfies $\mathrm{mod}(m, 2)=1$, and/or only the second DMRS port set is configured in a slot that satisfies $\mathrm{mod}(m, 2)=0$, wherein
m is an $m^{\mathrm{th}}$ slot in a plurality of slots corresponding to a scheduled uplink physical shared channel PUSCH; or
only the first DMRS port set is configured in a slot that satisfies $\mathrm{mod}(m, 2)=0$, and/or only the second DMRS port set is configured in a slot that satisfies $\mathrm{mod}(m, 2)=1$, wherein
m is an index of the slot.

35. The communication apparatus according to any one of claims 28 to 34, wherein the first DMRS port set comprises DMRS ports whose indexes are 0 to 23; and

the second DMRS port set comprises DMRS ports whose indexes are 0 to 11 and 24 to 35;
the second DMRS port set comprises DMRS ports whose indexes are 24 to 35; or
the second DMRS port set comprises DMRS ports whose indexes are 24 to 47.

36. The communication apparatus according to any one of claims 28 to 35, wherein the first time domain position and the second time domain position each correspond to two symbols.

37. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9.

38. A communication apparatus, comprising a processor, wherein the processor is coupled to a memory, the memory is configured to store a program or instructions, and when the program or the instructions are executed by the processor, the apparatus is enabled to perform the method according to any one of claims 10 to 18.

39. A readable storage medium, wherein the readable storage medium stores a computer program or instructions, and when the computer program or the instructions are executed, a computer is enabled to perform the method according to any one of claims 1 to 9 or claims 10 to 18.

40. A computer program product, comprising computer program instructions, wherein the computer program instructions enable a computer to perform the method according to any one of claims 1 to 9 or claims 10 to 18.

FIG. 1

Configuration type 1

Configuration type 2

Single-symbol    Double-symbol    Single-symbol    Double-symbol

(a)    (b)    (c)    (d)

CDM group 1=
{P2, P3}
CDM group 0=
{P0, P1}

CDM group 1=
{P2, P3, P6, P7}
CDM group 0=
{P0, P1, P4, P5}

CDM group 2=
{P4, P5}
CDM group 1=
{P2, P3}
CDM group 0=
{P0, P1}

CDM group 2=
{P4, P5, P10, P11}
CDM group 1=
{P2, P3, P8, P9}
CDM group 0=
{P0, P1, P6, P7}

FIG. 2

300

FIG. 3

First time
domain position

Second time
domain position

FIG. 4

FIG. 5

FIG. 6

FIG. 7

FIG. 8

FIG. 9

FIG. 10

| | Slot n | Slot n+1 | Slot n+2 |
|---|---|---|---|

First time
domain
position

Second time
domain
position

Third time
domain
position

FIG. 11

FIG. 12

FIG. 13

FIG. 14

FIG. 15

First time
domain position

Second time
domain position

Index of a DMRS port corresponding to
the first time domain position

Index of a DMRS port corresponding to
the second time domain position

CDM group 2={P4, P5, P10, P11, P16, P17, P22, P23}
CDM group 1={P2, P3, P8, P9, P14, P15, P20, P21}
CDM group 0={P0, P1, P6, P7, P12, P13, P18, P19}

CDM group 2={P28, P29, P34, P35}

CDM group 1={P26, P27, P32, P33}

CDM group 0={P24, P25, P30, P31}

FIG. 16

FIG. 17

FIG. 18

First time
domain position

Second time
domain position

DMRS port corresponding to the
first time domain position:

CDM group 2={P4, P5, P10, P11, P16, P17, P22, P23}
CDM group 1={P2, P3, P8, P9, P14, P15, P20, P21}
CDM group 0={P0, P1, P6, P7, P12, P13, P18, P19}

DMRS port corresponding to the
second time domain position:

CDM group 2={P28, P29, P34, P35, P40, P41, P46, P47}
CDM group 1={P26, P27, P32, P33, P38, P39, P44, P45}
CDM group 0={P24, P25, P30, P31, P36, P37, P42, P43}

FIG. 19

FIG. 20

Slot n | Slot n+1

| 0 1 2 3 4 5 6 7 8 9 10 11 12 13 | 0 1 2 3 4 5 6 7 8 9 10 11 12 13 |

First time
domain position

Second time
domain position

Index of a DMRS port corresponding to
the first time domain position

Index of a DMRS port corresponding to
the second time domain position

CDM group 2={P4, P5, P10,
P11, P16, P17, P22, P23}
CDM group 1={P2, P3, P8,
P9, P14, P15, P20, P21}
CDM group 0={P0, P1, P6,
P7, P12, P13, P18, P19}

CDM group 2={P28, P29, P34, P35,
P40, P41, P46, P47}
CDM group 1={P26, P27, P32, P33,
P38, P39, P44, P45}
CDM group 0={P24, P25, P30, P31,
P36, P37, P42, P43}

FIG. 21

Slot n | Slot n+2

First time
domain position

Second time
domain position

Index of a DMRS port corresponding to
the first time domain position

CDM group 2={P4, P5, P10, P11, P16, P17, P22, P23}

CDM group 1={P2, P3, P8, P9, P14, P15, P20, P21}

CDM group 0={P0, P1, P6, P7, P12, P13, P18, P19}

Index of a DMRS port corresponding to
the second time domain position

CDM group 2={P28, P29, P34, P35}

CDM group 1={P26, P27, P32, P33}

CDM group 0={P24, P25, P30, P31}

FIG. 22

First time
domain position

Second time
domain position

Index of a DMRS port corresponding to
the first time domain position

Index of a DMRS port corresponding to
the second time domain position

CDM group 2={P4, P5, P10, P11,
P16, P17, P22, P23}
CDM group 1={P2, P3, P8, P9,
P14, P15, P20, P21}
CDM group 0={P0, P1, P6, P7,
P12, P13, P18, P19}

CDM group 2={P28, P29, P34, P35,
P40, P41, P46, P47}
CDM group 1={P26, P27, P32, P33,
P38, P39, P44, P45}
CDM group 0={P24, P25, P30, P31,
P36, P37, P42, P43}

FIG. 23

First time domain position  Second time domain position  Third time domain position

DMRS port corresponding to the first time domain position:

CDM group 2={P4, P5, P10, P11}

CDM group 1={P2, P3, P8, P9}

CDM group 0={P0, P1, P6, P7}

DMRS port corresponding to the second time domain position:

CDM group 2={P16, P17, P22, P23}

CDM group 1={P14, P15, P20, P21}

CDM group 0={P12, P13, P18, P19}

DMRS port corresponding to the third time domain position:

CDM group 2={P28, P29, P34, P35}

CDM group 1={P26, P27, P32, P33}

CDM group 0={P24, P25, P30, P31}

FIG. 24

DMRS port corresponding to the first time domain position:

CDM group 2={P4, P5, P10, P11}

CDM group 1={P2, P3, P8, P9}

CDM group 0={P0, P1, P6, P7}

DMRS port corresponding to the second time domain position:

CDM group 2={P16, P17, P22, P23}

CDM group 1={P14, P15, P20, P21}

CDM group 0={P12, P13, P18, P19}

DMRS port corresponding to the third time domain position:

CDM group 2={P28, P29, P34, P35}

CDM group 1={P26, P27, P32, P33}

CDM group 0={P24, P25, P30, P31}

FIG. 25

EP 4 262 122 A1

400

Terminal device

Network device

S410: Indication information

S420: DMRS

FIG. 26

Communication apparatus 2000

Receiving unit 2100

Sending unit 2200

Processing unit 2300

FIG. 27

FIG. 28

FIG. 29

## INTERNATIONAL SEARCH REPORT

| | International application No. |
| --- | --- |
| | **PCT/CN2020/142580** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; 3GPP: 解调参考信号, DMRS, 端口, 集合, 调度, 时域, 时隙, 位置, 前置, 额外, 不同, DMRS, demodulation reference signal, port, set, schedule, time domain, slot, front loaded, additional, different

**C. DOCUMENTS CONSIDERED TO BE RELEVANT**

| Category* | Citation of document, with indication, where appropriate, of the relevant passages | Relevant to claim No. |
| --- | --- | --- |
| X | CN 111786754 A (TELECOMMUNICATIONS SCIENCE AND TECHNOLOGY RESEARCH INSTITUTE CO., LTD.) 16 October 2020 (2020-10-16) claims 1-24 | 1-40 |
| X | CN 109391456 A (HUAWEI TECHNOLOGIES CO., LTD.) 26 February 2019 (2019-02-26) claims 1-46 | 1-40 |
| X | CN 111049628 A (HUAWEI TECHNOLOGIES CO., LTD.) 21 April 2020 (2020-04-21) claims 1-51 | 1-40 |
| A | CN 110535616 A (BEIJING SPREADTRUM HIGH-TECH COMMUNICATIONS TECHNOLOGY CO., LTD.) 03 December 2019 (2019-12-03) entire document | 1-40 |
| A | WO 2018174665 A1 (INNOVATIVE TECH LAB CO., LTD.) 27 September 2018 (2018-09-27) entire document | 1-40 |
| A | 3GPP. "Technical Specification Group Radio Access Network; NR; Physical channels and modulation (Release 16)" *3GPP TS 38.211 v16.3.0*, 01 October 2020 (2020-10-01), section 6.4.1 | 1-40 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 July 2021** | **28 July 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/142580**

| Patent document cited in search report | | | Publication date (day/month/year) | Patent family member(s) | | | Publication date (day/month/year) |
|---|---|---|---|---|---|---|---|
| CN | 111786754 | A | 16 October 2020 | WO | 2020199910 | A1 | 08 October 2020 |
| | | | | TW | 202038643 | A | 16 October 2020 |
| CN | 109391456 | A | 26 February 2019 | EP | 3584975 | A4 | 16 September 2020 |
| | | | | CA | 3053864 | A1 | 14 February 2019 |
| | | | | KR | 20190110618 | A | 30 September 2019 |
| | | | | CN | 109995499 | A | 09 July 2019 |
| | | | | CN | 109995499 | B | 03 April 2020 |
| | | | | BR | 112019020884 | A2 | 28 April 2020 |
| | | | | JP | 2020517129 | A | 11 June 2020 |
| | | | | US | 2019342062 | A1 | 07 November 2019 |
| | | | | CN | 109995498 | A | 09 July 2019 |
| | | | | US | 2020336275 | A1 | 22 October 2020 |
| | | | | CN | 109995498 | B | 10 March 2020 |
| | | | | US | 10715300 | B2 | 14 July 2020 |
| | | | | EP | 3584975 | A1 | 25 December 2019 |
| | | | | WO | 2019029329 | A1 | 14 February 2019 |
| CN | 111049628 | A | 21 April 2020 | WO | 2020073991 | A1 | 16 April 2020 |
| CN | 110535616 | A | 03 December 2019 | | None | | |
| WO | 2018174665 | A1 | 27 September 2018 | US | 2020228273 | A1 | 16 July 2020 |
| | | | | US | 2018278395 | A1 | 27 September 2018 |
| | | | | CN | 110945816 | A | 31 March 2020 |
| | | | | EP | 3602945 | A1 | 05 February 2020 |
| | | | | US | 10644849 | B2 | 05 May 2020 |
| | | | | EP | 3602945 | A4 | 30 December 2020 |

Form PCT/ISA/210 (patent family annex) (January 2015)